Europäisches Patentamt

European Patent Office

Office européen des brevets

(19)

(11) EP 1 252 609 B1

(12) **EUROPEAN PATENT SPECIFICATION**

(45) Date of publication and mention
of the grant of the patent:
**16.02.2005 Bulletin 2005/07**

(21) Application number: **00978432.3**

(22) Date of filing: **07.11.2000**

(51) Int Cl.⁷: **G07B 17/04**

(86) International application number:
**PCT/US2000/030709**

(87) International publication number:
**WO 2001/035344 (17.05.2001 Gazette 2001/20)**

(54) **TECHNIQUES FOR DISPENSING POSTAGE USING A COMMUNICATION NETWORK**

TECHNIKEN ZUR AUSGABE VON POSTWERTZEICHEN ÜBER EIN NETZWERK

TECHNIQUES D'AFFRANCHISSEMENT PAR UN RESEAU DE COMMUNICATION

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **10.11.1999 US 164639 P
08.02.2000 US 181368 P
09.02.2000 US 181299 P
15.05.2000 US 204357 P
22.05.2000 US 206207 P
07.07.2000 US 611375
07.07.2000 US 216653 P
07.07.2000 US 216779 P**

(43) Date of publication of application:
**30.10.2002 Bulletin 2002/44**

(73) Proprietor: **Neopost Inc.
Hayward, CA 94544 (US)**

(72) Inventors:
• **LEON, J., P.
San Carlos, CA 94070 (US)**
• **BROWN, L., Carlton, Jr.
Warrenton, VA 20187 (US)**

(74) Representative: **David, Alain et al
Cabinet Beau de Loménie
158, rue de l'Université
75340 Paris Cedex 07 (FR)**

(56) References cited:
**EP-A- 0 780 809          EP-A- 0 927 960
WO-A-98/57302          WO-A-99/18543
US-A- 5 848 401**

• **UNITED STATES POSTAL SERVICE:
"Performance Criteria For Information-Based
Indicia And Security Architecture For Open IBI
Postage Evidencing Systems" INFORMATION
BASED INDICIA PROGRAM, 25 June 1999
(1999-06-25), XP002161216**

**EP 1 252 609 B1**

**Description**

BACKGROUND OF THE INVENTION

The present invention relates generally to postage dispensing systems, and more particularly to techniques for dispensing postage in a distributed environment using a communication network.

Traditionally, consumers could purchase postage or stamps only from special locations designated by a postal authority. For example, in the U.S., consumers could buy postage only from post offices or other centers specifically authorized by the United States Postal Service (USPS) to sell postage. A disadvantage of this traditional postage buying method is that a consumer has to spend the time and make the effort to physically travel to the post office to buy postage.

In order to alleviate the inconveniences associated with traditional techniques described above, postal authorities such as the USPS, now allow postage to be printed by electromechanical postage meters which can be placed at the consumers' or users' premises. Such postage meters can be leased, rented, or purchased where allowed, from the postal authority or from vendors, such as Neopost™, who have been authorized by the postal authority to sell the meters. Typically, the user purchases a fixed amount of postage value beforehand and the meter is programmed with this amount. Subsequently, the user is allowed to print postage up to the programmed amount. The meter typically includes a print mechanism and mechanical arrangements and/or electronic control circuitry that direct the operation of the print mechanism.

Because the meter is capable of printing postage having a value, the postal authority generally mandates that, in order to maintain security of the postal funds, the postage meters be acquired and used/handled according to strict, complex, and often bureaucratic regulations imposed by the postal authority. For example, a special meter agreement has to be signed between the meter vendor and the user before the meter can be rented or leased by the user. The user also has to secure a postal license number from a postal authority and the meter has to be seeded with the postal license number. A postal license number is usually associated with a geographical address of a user and is used by the postal authority to track the location of the postage meter and its user. A user using postage meters at multiple geographical addresses has to secure multiple postal licenses, one for each address. Additionally, before a new meter is put into service, the meter has to be inspected and sealed by postal authority personnel. Once in service, each meter has to be periodically inspected by postal authority representatives. Further, postal regulations mandate that the postage meter itself incorporate a variety of security features thereby increasing the costs associated with acquiring and using the meter. As a result, renting or leasing, and subsequently using a postal meter can often be expensive, inconvenient, and involve many bureaucratic hurdles. Consequently, it is quite impractical for individual users to use postage meters.

With a view towards alleviating some of the above-mentioned problems and making use of advances in electronics and communications, the United States Postal Service (USPS) has promulgated specifications for its Information Based Indicia Program (IBIP). The IBIP program supports new methods of applying postage in lieu of conventional approaches that typically rely on the use of a postage meter mechanically printing the indicium on mail pieces.

The IBIP program contemplates postal indicia printed by conventional printers (e.g., thermal, inkjet, or laser) and including human-readable and machine-readable portions. An indicium refers to the imprinted designation or a postage mark used on mail pieces denoting evidence of postage payment. The machine-readable portion was initially specified to be a two-dimensional barcode symbology known as PDF417. The indicium content includes a digital signature for security reasons (to preclude forgery). There are separate specifications for open and closed systems.

The specifications have been updated over the last few years; the recent specifications for open and closed systems are:

- Information-Based Indicia Program (IBIP) Performance Criteria for Information-Based Indicia and Security Architecture for Open IBI Postage Evidencing Systems (PCIBI-O) (Draft February 23, 2000), and
- Information-Based Indicia Program (IBIP) Performance Criteria for Information-Based Indicia and Security Architecture for Closed IBI Postage Metering Systems (PCIBI-C) (Draft January 12, 1999).

These specifications are herein incorporated by reference in their entirety for all purposes.

An open system is defined as a general purpose computer used for printing information-based indicia, but not dedicated to the printing of those indicia. A closed system is defined as a system whose basic components are dedicated to the production of information-based indicia and related functions, that is, a device dedicated to creating indicia similar to an existing, traditional postage meter. A closed system may be a proprietary device used alone or in conjunction with other closely related, specialized equipment, and includes the indicium print mechanism.

The IBIP program specifies a postal security device (PSD) that manages the secure postage registers and performs the cryptographic operations of creating and verifying digital signatures.

The open system specification describes a host system (a computer or postage meter) connected to an unsecured printer (e.g., a laser printer or the like) and a PSD. The host system also provides communication facilities that allow the PSD's vendor and/or the USPS to establish communications with the PSD. Communications supported include troubleshooting, accounting transactions, and the like.

The PSD and host cooperate to provide an indicium, which is then transmitted to and printed by the unsecured printer. The specified indicium allows the use of an unsecured printer (e.g., thermal, inkjet, or laser) by using a digital signature, which also supports authentication of the mail piece. The indicium includes human-readable information and machine-readable information (initially specified as a PDF417 two-dimensional bar code). Each PSD is a unique security device, having core security functions such as digital signature generation and verification and secure management of information (e.g., descending and ascending registers).

Several techniques have been developed, based on the IBIP program, to streamline and simplify the use of postage meters while providing the required security. For example, U.S. Patent No. 6,005,945 (Whitehouse) discloses a system for electronic distribution of postage using a secure central computer which generates the postal indicia in response to postage requests submitted by end user computers. However, these conventional techniques, including the system described in the Whitehouse patent, still require the user to apply for and obtain a postal license number from a postal authority. Further, since a postal license is associated with a particular address, if the user wants to purchase postage from more than one address, the user has to secure multiple postal license numbers, one for each address. As a result, a user still has to suffer the inconveniences and bureaucratic hurdles of obtaining postal license numbers. Further, since the issuance of postal licenses may take several days or even weeks, valuable time is wasted before a user can make use of services provided by a postage vendor. Thus, even though electronic postage distribution techniques based upon the IBIP program have reduced inconveniences associated with traditional postage meters, they are still significantly unwieldy.

In light of the above, there is a need for techniques which allow a user to buy postage without suffering the inconveniences described above. It is further desirable that the techniques be operable in a distributed environment and make use of communication network such as the Internet.

For example, document WO 98/57302 relates to a virtual postage metering system to provide metering transactions without storing value at a user's site. The system also includes a database of every mail piece to help the postal service tailor its services.

SUMMARY OF THE INVENTION

The present invention provides techniques for dispensing postage using a communication network such as the Internet. According to an embodiment of the present invention, a single postal license number assigned by a postal authority, such as the USPS, to a postage vendor system (PVS) is used by the PVS to cater to postage requests from a plurality of unrelated users who may be at different geographical addresses. According to an embodiment of the present invention, the PVS may comprise a plurality of server systems may receive requests to purchase stamps from one or more user systems. In response to the postage purchase requests, the PVS may generate information for printing indicia corresponding to the stamp requests based upon the single postal license number associated with the PVS. The information for printing the indicia may then be communicated to the one or more user systems. Thus, according to the present invention, a single postal license number is effectively shared between a plurality of users who may have different geographical addresses.

According to an embodiment of the present invention, a request to purchase a stamp includes information identifying the medium on which the indicium corresponding to the stamp is to be printed. The PVS validates the information identifying the medium and generates information for printing the indidum corresponding to the stamp only if the information identifying the medium is valid. According to an embodiment, the indidum is printed on a label and the information identifying the medium is a serial number associated with the label. According to another embodiment of the present invention, the indicium is printed on a label from a sheet of labels and the information identifying the medium is a serial number associated with the sheet of labels.

According to an embodiment of the present invention, upon receiving a request to purchase a stamp, a first server from the plurality of servers of the PVS is selected to generate the information for printing the indicium corresponding to the stamp. The first server may select a first postal security device (PSD) resource from a plurality of PSD resources stored by the PVS. The first server may decrease a first value associated with the first PSD resource by the value of the stamp, increase a second value associated with the first PSD resource by the value of the stamp, and generate the information for printing the indicium corresponding to the stamp using the first PSD resource. The first PSD resource may also be used to generate information for printing indicia corresponding to other stamp purchase requests.

According to another embodiment of the present invention, techniques are disclosed for dispensing postage using a first system comprising a web server and a processing server. A single postal license assigned by a postal authority is associated with the first system. The web server may receive a request from a second system to purchase a stamp, and in response, the processing server may generate information for printing an indicium corresponding to the stamp based upon the single postal license associated with the first system. The information for printing the indicium is then communicated to the second system.

According to yet another embodiment of the present invention, techniques are described for purchasing postage using one or more data processing systems. In this embodiment, a first data processing system located at a first address may transmit a first request to purchase a first stamp to a postage vendor system comprising a plurality of servers. The first data processing system may receive information for printing a first indicium corresponding to the first stamp from the postage vendor system. The first indicium may be printed at the first data processing system based upon the information for printing the first indicium received from the postage vendor system. Likewise, a plurality of other data processing systems may also be used to purchase postage from the postage vendor system.

According to another embodiment of the present invention, techniques are disclosed for dispensing postage using a postage vendor system. The postage vendor system may receive a first request from a first user system requesting purchase of a first stamp and a second request from a second user system requesting purchase of a second stamp. The postage vendor system may select a first postal security device (PSD) resource from a plurality of PSD resources stored by the postage vendor system, decrease a first value associated with the first PSD resource by a value of the first stamp, increase a second value associated with the first PSD resource by the value of the first stamp, and generate information for printing a first indicium corresponding to the first stamp. The postage vendor system may also decrease the first value associated with the first PSD resource by a value of the second stamp, increase the second value associated with the first PSD resource by the value of the second stamp, and generate information for printing a second indicium corresponding to the second stamp. The postage vendor system may then communicate the information for printing the first indicium to the first user system, and communicate the information for printing the second indicium to the second user system.

A further understanding of the nature and advantages of the present invention may be realized by reference to the remaining portions of the specification and the attached drawings.

BRIEF DESCRIPTION OF THE DRAWINGS

Fig. 1 is a simplified block diagram of a distributed computer network which may incorporate an embodiment of the present invention;

Fig. 2 is a simplified block diagram of an exemplary computer system according to an embodiment of the present invention;

Fig. 3 is a simplified high-level flowchart showing processing performed by a user system and a postage vendor system for dispensing postage according to an embodiment of the present invention;

Fig. 4 depicts an exemplary individual pre-printed label on which an indicium may be printed according to an embodiment of the present invention;

Fig. 5 depicts a sheet of pre-printed labels according to an embodiment of the present invention;

Fig. 6 depicts an individual label with an indicium printed on it according to an embodiment of the present invention;

Fig. 7 is an expanded block diagram of a postage vendor system according to an embodiment of the present invention;

Fig. 8 is a simplified flowchart showing processing performed by the various components of a postage vendor system upon receiving a request to purchase postage according to an embodiment of the present invention;

Fig. 9 depicts relationships between AR and DR values of the GPSD and the MPSDs according to an embodiment of the present invention; and

Fig. 10 is a simplified flowchart showing processing performed by a postage vendor system for funding a MPSD resource according to an embodiment of the present invention.

DESCRIPTION OF THE SPECIFIC EMBODIMENTS

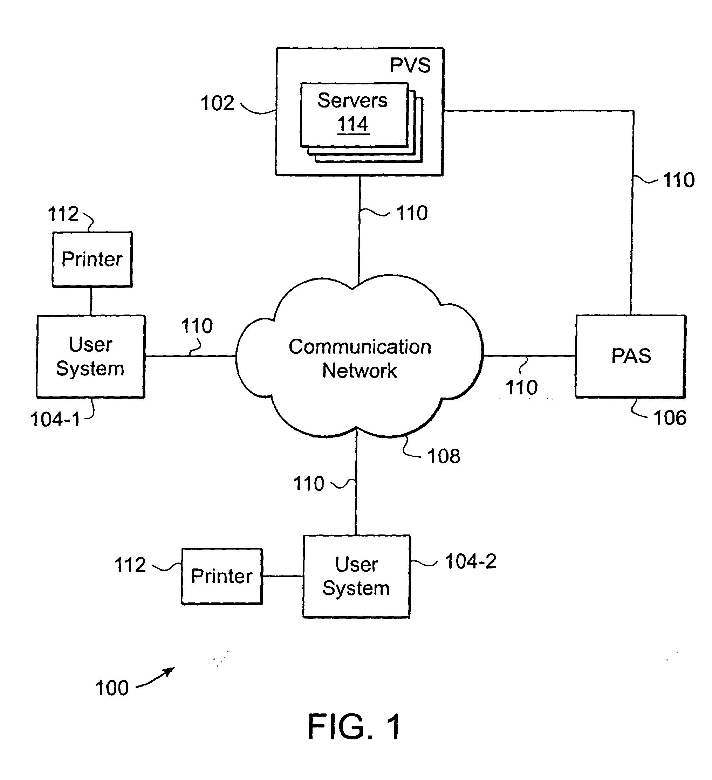

The present invention provides techniques for dispensing postage using a communication network such as the Internet. Fig. 1 is a simplified block diagram of a distributed computer network 100 which may incorporate an embodiment of the present invention. Computer network 100 includes one or more user computer systems 104-1 and 104-2, (hereinafter referred to generically as user system 104), at least one postage vendor system (PVS) 102, and a postal authority system (PAS) 106 coupled to a communication network 108 via a plurality of communication links 110. User systems 104 may optionally be coupled to one or more printers 112 or other like printing devices, and other peripheral devices (not shown) such as a weighing scale.

Communication network 108 provides a mechanism for allowing the various components of distributed network 100 to communicate and exchange information with each other. Communication network 108 may itself be comprised of many interconnected computer systems and communication links. Communication links 110 may be hardwire links, optical links, satellite or other wireless communications links, wave propagation links, or any other mechanisms for communication of information. While in one embodiment communication network 108 is the Internet, in other embodiments, communication network 108 may be any suitable computer network. Distributed computer network 100 depicted in Fig. 1 is merely illustrative of an embodiment incorporating the present invention and does not limit the scope of the invention as recited in the claims. One of ordinary skill in the art would recognize other variations, modifications, and alternatives. For example, more than one PVS 102 may be coupled to communication network 108. Further, one or more printers 112 may optionally be coupled to a single user system 104, or alternatively a plurality of user systems 104 may share one or more common printers. Other devices such as weighing machines for weighing mail pieces, fax machines, scanners, etc. may also be coupled to user systems 104.

User systems 104 allow users of the present invention, for example, postage consumers, to interact with and buy postage from PVS 102. These users may include one or more human beings interacting with an user system 104, one or more processes executing on user system 104 or systems coupled to user systems 104, devices coupled to user systems 104, or other entities capable of interacting with PVS 102. Various different types of interactions with PVS 102 are facilitated by user systems 104. For example, users may use user systems 104 to configure requests to purchase postage from PVS 102. These user purchase requests are then communicated from user systems 104 to PVS 102 via communication network 108. In response to the user requests, user systems 104 may receive information for printing indicia (or a single indicium) from PVS 102. A user may then use user system 104 to print the indicia using printer devices coupled to or accessible to user system 104. The indicia may be printed on labels, on paper, on the mail pieces themselves, or on other like media. In alternative embodiments of the present invention, a user using user system 104 may store the information for printing indicia received from PVS 102 on a storage medium, such as a computer disk, for subsequent printing of the indicia.

Users may also use user systems 104 to perform other activities such as browse web-pages stored by PVS 102, register as users of services provided by PVS 102, provide financial and credit information for consummating commercial transactions with PVS 102, review status of user accounts maintained by PVS 102, review postage purchase history, access help or customer services provided by PVS 102, and to perform other like activities. Accordingly, in a client-server environment, user system 104 typically operates as a client requesting information from PVS 102 which operates as a server which performs processing in response to the client request and provides the requested information to the client systems. It should be however apparent that a particular user system 104 may act both as a client or a server depending on whether the user system is requesting or providing information.

As stated above, a user may use user system 104 to browse or interact with web pages provided by PVS 102. These web pages may be stored by one or more web servers of PVS 102 and may be accessed by users of user system 104 via a browser program executing on user system 104. Examples of browser programs include the Internet Explorer browser program provided by Microsoft Corporation, the Netscape Navigator browser provided by Netscape Corporation, and others. In the Internet and World Wide Web (the "Web") environment, the web pages may be written in Hypertext Markup Language (HTML) and may incorporate any combination of text, graphics, audio and video content, software programs, and other data. Web pages may also contain hypertext links to other web pages. Each web page is uniquely identified by an address called a Uniform Resource Locator (URL) that enables users to access the web page. Users may access web pages by providing URL information to the browser, either directly or indirectly, and in response, a web page corresponding to the user-specified URL is downloaded from a server coupled to communication network 108 to the requesting user computer 104. The downloaded web page may then be viewed by the user using the browser.

According to the teachings of the present invention, PVS 102 is responsible for dispensing postage in response to postage purchase requests received from user systems 104. As shown in Fig. 1, PVS 102 may itself be comprised of multiple interconnected computer and server systems 114 and communication links, as will be described below. PVS 102 may be configured to receive postage requests from user systems 104, validate the postage requests, generate information for printing indicia in response to the postage requests, perform security functions related to the postage transactions, manage funds related to the postage transactions, communicate the information for printing the indicia to the requesting user systems 104, maintain and manage user accounts, and several other functions. These functions are generally performed by software code modules executed by PVS 102. However, it should be apparent that these functions may be also performed by software modules or hardware modules of PVS 102, or combinations thereof.

According to an embodiment of the present invention, the information for printing indicia generated by PVS 102 is generally along the lines specified by the IBIP specifications published by the United States Postal Service (USPS). According to the teachings of the present invention, the security-critical functions performed by PVS 102 as part of generating the information for printing the indicia comply with the security-critical functions performed by the Postal Security Device (PSD) described in the IBIP specifications. PVS 102 may also be configured to perform functions performed by the Host System described in the IBIP specifications. The entire contents of the IBIP specifications are herein incorporated by reference for all purposes. Further, details regarding the functions performed by PVS 102 are provided below.

According to the teachings of the present invention, a single postal license number is assigned to each PVS 102 by a postal authority such as the USPS. PVS 102 uses the single postal license number to cater to postage requests from a plurality of unrelated users who may be at different geographical addresses. Thus, according to the present invention, a single postal license number is effectively shared between a plurality of users who may have different geographical addresses. This is substantially different from conventional postage vending techniques wherein a user is required to apply for and receive at least one unique postal license number. This is the case even if the postage indicium is generated by a central computer, for example, as discussed in U.S. Patent No. 6,005,945 (Whitehouse). Accordingly, the present invention provides a level of postage buying convenience heretofore not achieved by conventional techniques. Since the postal license number is associated with PVS 102 rather than with the user, the user is shielded from the procedural steps required for obtaining the postal license number. In fact, according to the present invention, the consumer of the postage does not even have to be aware of the postal license number. A user may buy postage by simply sending a postage request to PVS 102 and receiving information for printing one or more indicia corresponding to the request from PVS 102.

Referring back to Fig. 1, postal authority system (PAS) 106 may comprise one or more computer systems managed by a postal authority authorized to regulate and control postal matters. Examples of postal authorities include the United States Postal Service (USPS), France's La Poste, UK's Royal Mail, and others. In most instances, the postal authority is a governmental or quasi-governmental agency authorized to oversee postal matters. PAS 106 may be coupled to PVS 102 via communication network 108 or directly via some other communication link 110. The information exchanged between PVS 102 and PAS 106 may include finance information, information required by the postal authority for audit purposes, status information, security information, and other like information. The information required by the postal authority for audit purposes may include information identifying the postage buyers, the postage value and amount purchased by the buyers, and other information. PVS 102 may be configured to download information to PAS 106 on a periodic basis using batch processing, or upon the occurrence of certain events. PVS 102 may also be configured to purchase postage from PAS 106.

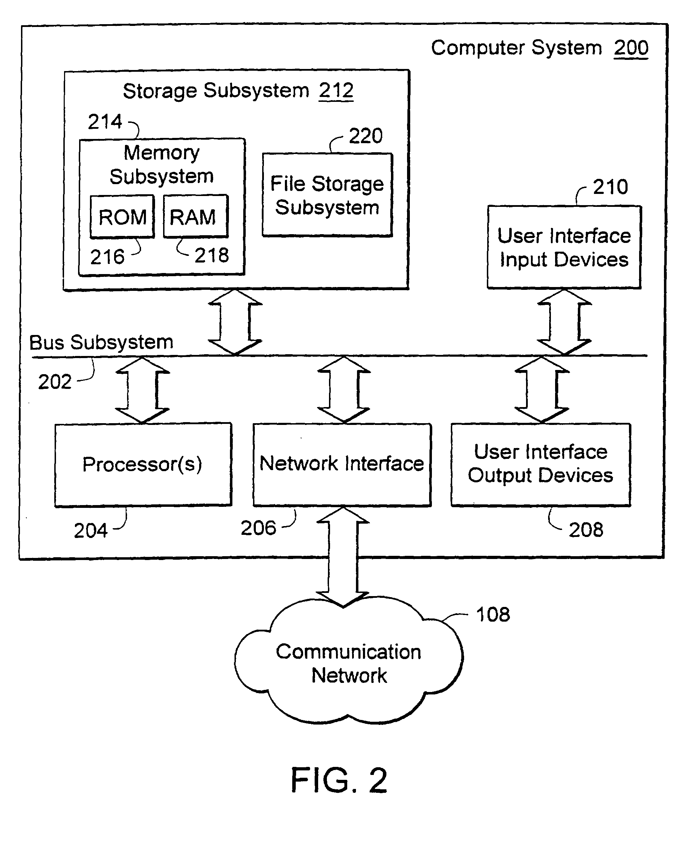

Fig. 2 is a simplified block diagram of an exemplary computer system 200 according to an embodiment of the present invention. Computer system 200 may function as user system 104, as PVS 102 or as one of the computer systems which make up PVS 102, as PAS 106, or other like system. Computer system 200 typically includes at least one processor 204, which communicates with a number of peripheral devices via bus subsystem 202. These peripheral devices typically include a storage subsystem 212, comprising a memory subsystem 214 and a file storage subsystem 220, user interface input devices 210, user interface output devices 208, and a network interface subsystem 206. The input and output devices allow user interaction with computer system 200. It should be apparent that the user may be a human user, a device, a process, another computer, and the like. Network interface subsystem 206 provides an interface to outside networks, including an interface to communication network 108, and is coupled via communication network 108 to corresponding interface devices in other computer systems.

User interface input devices 210 may include a keyboard, pointing devices such as a mouse, trackball, touchpad, or graphics tablet, a scanner, a barcode scanner for scanning article barcodes, a touchscreen incorporated into the display, audio input devices such as voice recognition systems, microphones, and other types of input devices. In general, use of the term "input device" is intended to include all possible types of devices and ways to input information into computer system 200 or onto communication network 108.

User interface output devices 208 may include a display subsystem, a printer, a fax machine, or non-visual displays such as audio output devices. The display subsystem may be a cathode ray tube (CRT), a flat-panel device such as a liquid crystal display (LCD), or a projection device. The display subsystem may also provide non-visual display such as via audio output devices. In general, use of the term "output device" is intended to include all possible types of devices and ways to output information from computer system 200 to a user or to another machine or computer system.

Storage subsystem 212 stores the basic programming and data constructs that provide the functionality of the computer system. For example, the various modules implementing the functionality of the present invention may be stored in storage subsystem 212 of PVS 102. These software modules are generally executed by processor(s) 204. In a distributed environment, the software modules may be stored on a plurality of computer systems and executed by processors of the plurality of computer systems. Storage subsystem 212 also provides a repository for storing the various databases storing information according to the present invention. Storage subsystem 212 typically comprises memory subsystem 214 and file storage subsystem 220.

Memory subsystem 214 typically includes a number of memories including a main random access memory (RAM) 218 for storage of instructions and data during program execution and a read only memory (ROM) 216 in which fixed instructions are stored. File storage subsystem 220 provides persistent (non-volatile) storage for program and data files, and may include a hard disk drive, a floppy disk drive along with associated removable media, a Compact Digital Read Only Memory (CD-ROM) drive, an optical drive, removable media cartridges, and other like storage media. One or more of the drives may be located at remote locations on other connected computers at another site on communication network 108. Information stored according to the teachings of the present invention may also be stored by file storage subsystem 220.

Bus subsystem 202 provides a mechanism for letting the various components and subsystems of computer system 200 communicate with each other as intended. The various subsystems and components of computer system 200 need not be at the same physical location but may be distributed at various locations within distributed network 100. Although bus subsystem 202 is shown schematically as a single bus, alternative embodiments of the bus subsystem may utilize multiple busses.

Computer system 200 itself can be of varying types including a personal computer, a portable computer, a workstation, a computer terminal, a network computer, a mainframe, or any other data processing system. Due to the ever-changing nature of computers and networks, the description of computer system 200 depicted in Fig. 2 is intended only as a specific example for purposes of illustrating the preferred embodiment of the computer system. Many other configurations of a computer system are possible having more or fewer components than the computer system depicted in Fig. 2. Client computer systems and server computer systems generally have the same configuration as shown in Fig. 2, with the server systems generally having more storage capacity and computing power than the client systems.

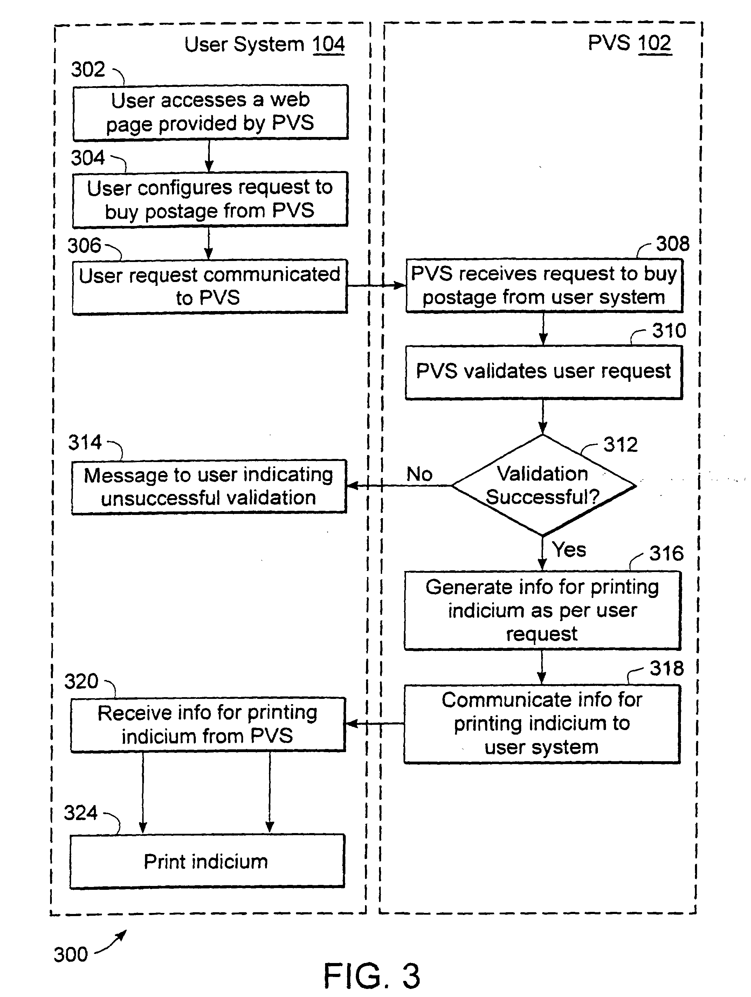

Fig. 3 is a simplified high-level flowchart 300 showing processing performed by user system 104 and PVS 102 for dispensing postage according to an embodiment of the present invention. As shown in Fig. 3, processing is generally initiated when a user accesses a web page provided by PVS 102 using user system 104 (step 302). As described above, the user may access the web pages by providing URL information corresponding to the web pages to a browser executing on user system 104. Using the web page(s), the user may then configure a request to buy postage from PVS 102 (step 304). For example, the user may request purchase of one or more $0.33 stamps. The user may also use devices connected to user system 104 to configure the request. For example, a weighing scale connected to user system 104 may be used to provide information related to the weight of the mail piece for which postage is to be purchased.

According to an embodiment of the present invention, a user may be required to first register as a user of PVS 102 and open an account with PVS 102 before the user is allowed to buy postage from PVS 102. As part of this registration process, the user may be asked to provide information to PVS 102 such as information identifying the user, credit-card or other like information which may be used by PVS 102 to bill for postage purchased by the user, and other information. The information provided by the user may be stored by PVS 102 and a unique identifier may be assigned to the user to uniquely identify the user. The user may also be allowed to select a password to access the user's account. The user may also be allowed to configure user preferences related to postage buying activities. The user may also be allowed to store funds in the account which may be used for postage purchases. It should be apparent that in alternative embodiments of the present invention, the user may be allowed to buy postage from PVS 102 without opening an account or registering with PVS 102.

The user request to purchase postage may include information identifying the user, credit-card or other like information which will be used by PVS 102 to bill for the purchased postage, the amount and value/denomination of the postage which the user wishes to purchase, and other like information which may be used by PVS 102 to process the request. A single user request may request purchase of one or more stamps. If the user is a registered user and has a pre-established account with PVS 102, the user identification information may include a user identifier assigned by PVS 102 to the user during user registration. Further, for a registered user, PVS may use information provided by the user during the registration process for billing purposes, and consequently the credit-card or other like information may not be included in the user request.

The user request may also include other information related to the mail piece/package. For example, the user request may include information related to the weight of the mail piece/package which may be used by PVS 102 to compute the exact postage value required for mailing the mail piece/package. The weight information may be directly input by the user, or may be received from devices, e.g. weighing devices, coupled to user system 104. According to an embodiment of the present invention, the user request may also comprise information identifying the medium on which the indicium (or indicia) is to be printed. For example, if the indicium is to be printed on a label or a sheet of labels, the user request may include information, such as a serial number, associated with the label or sheet of labels. The serial number may be input by the user during step 304. Alternatively, information identifying the medium may be scanned and provided to user system 104. Further details related to the use of labels and sheets of labels are provided below.

User system 104 then communicates the user's request to purchase postage to PVS 102 via communication network 108 (step 306). According to an embodiment, a secure socket layer (SSL) connection may be established between user system 104 and PVS 102 to facilitate communication of information between user system 104 and PVS 102.

PVS 102 then receives the user request to purchase postage from user system 104 (step 308). PVS 102 may then validate the user request (step 310). For example, PVS 102 may determine if the credit-card information provided by the user is valid. PVS 102 may use services provided by companies such as Cybercash and Cybersource to perform the credit-card information validation. If the request is from a registered user who has a pre-funded account, PVS 102 may determine if the user has sufficient funds in the user's account maintained by PVS 102 to satisfy the postage request. Alternatively, PVS 102 may determine if the credit-card information for the registered user is stored by PVS 102 or provided to PVS 102 by the user request. PVS 102 may also validate other information such as the identity of the user requesting the purchase, the serial number of the medium on which the postage indicium is to be printed, the type of postage requested by the user, and the like. If the validation process fails for any reason (step 312), the user's request may be terminated and a message may be communicated to the requesting user system 104 indicating that validation of the user request was not successful (step 314). A reason for why the validation failed may also be provided.

If validation is successful, PVS 102 then generates information for printing an indicium for each stamp requested in the user postage request (step 316). According to an embodiment of the present invention, the information for printing the indicium generated by PVS 102 is along the lines specified in the IBIP specifications published by the USPS. For each indicium, the information for printing the indicium may include a bitmap of the indicium a graphical image of the indicium, data representing the indicium, raw data corresponding to the indicium, or other information which facilitates printing of the indicium. The information for printing the indicium is then communicated from PVS 102 to the requesting user system via communication network 108 (step 318).

The requesting user system 104 then receives the information for printing the indicium (or indicia) from PVS 102 (step 320). The information received in step 320 may then be used to print the indicium (step 324). For example, a printer device coupled to user system 104 may be used to print the indicium (or indicia). According to an embodiment of the present invention, user system 104 may process the information received from PVS 102 before printing the indicium according to step 324. The indicium may be printed on any suitable medium such as a label, paper, sheet of labels, envelopes, cards, directly on the mail piece/package, or other like media. One or more indicia may be printed at a time. In alternative embodiments of the present invention, the user may store the information for printing the indicia on a storage medium, such as a memory disk, for subsequent printing.

In order to reduce fraudulent imprinting of the indicium, the medium on which the indicium is printed may be configured to possess special features which provide enhanced security against fraudulent misuse. For example, the indicium may be printed on labels which may contain any or all of a variety of security features, such as bar-coding, micro-printing, watermarking, use of fluorescent strips, serrated edges, taggants, and the like. If the indicium is printed on a special medium e.g. secure paper, the user may be prompted to make the special medium available to the printer and follow instructions related to the special medium before the indicium is printed. For example, the user may be prompted to feed a sheet of labels to the printer before the indicium is printed and select one or more labels on which the indicia is to be printed. The indicium or indicia may then be printed on one or more labels which may then be affixed onto the mail piece/package (just like an ordinary stamp purchased from the post office).

Several different techniques may be used for printing the indicium (or indicia) according to step 324. According to an embodiment, a printer program e.g. a "print.dll", may be downloaded to the user system 104 from PVS 102. The printer program may contain information required by the printer for printing the indicium and may control the printer and other peripheral devices, for example, a weighing machine, coupled to user system 104. The print program may be downloaded automatically from PVS 102 to user system 104 at regular. time intervals, or may be downloaded upon the occurrence of specific events such as when the information for printing the indicium or indicia is communicated to user system 104 or when PVS 102 determines that a newer version of the print program is available. After downloading, the print program may be configured to automatically execute when required to control the printer used for printing the indicium. The printer program may include, for example, a Java applet, a VBScript, a Java Script, ActiveX controls, a C++ program, a C program, a Java program, etc. which may be downloaded by the user or which may be automatically downloaded by PVS 102 to user system 104. In an embodiment of the present invention wherein the print program is a Java applet, the applet may be executed by the browser program when a user selects the option to print the indicium.

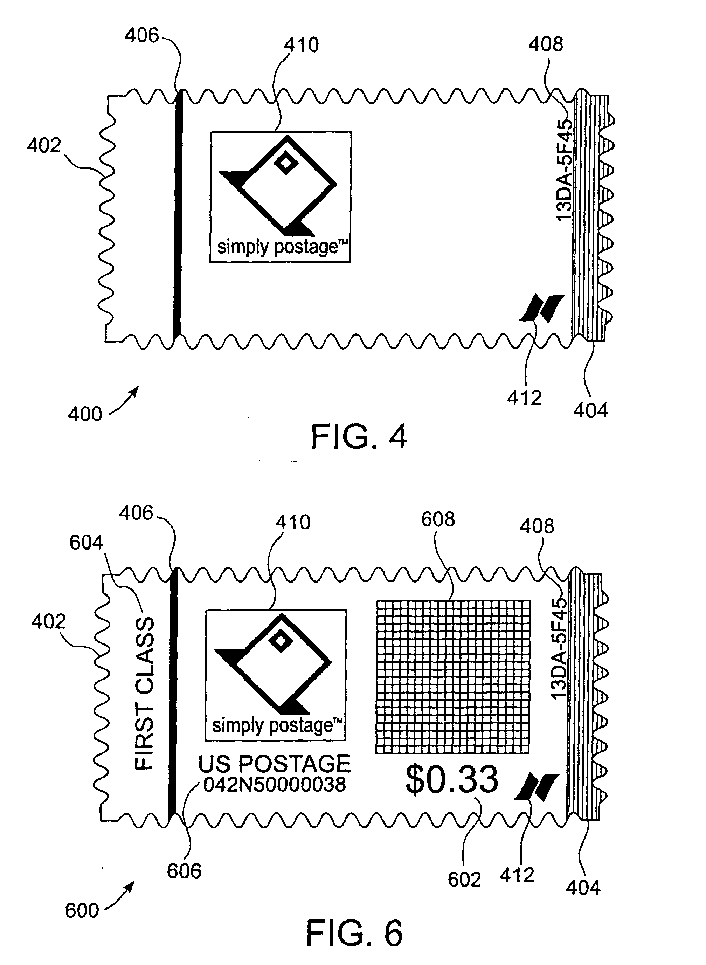

As stated above, the indicium may be printed on a label, paper, or other like medium, or even on the mail piece/package itself. Fig. 4 depicts an exemplary individual pre-printed label 400 on which the indicium may be printed according to an embodiment of the present invention. As shown in Fig. 4, label 400 has serrated edges 402 which not only serve as a security mechanism but also provide an aesthetic look and feel of a conventional U.S. postage stamp. Other security features imprinted on label 400 may include a colored stripe 404, lines of micro-print 406, a label serial number 408, a logo 410, and a watermark 412. These security features may be placed at different locations on label 400. The description of individual pre-printed label 400 depicted in Fig. 4 is intended only as a specific example for purposes of illustrating an embodiment of the present invention. Many other configurations of label 400 are possible having more or fewer features than those depicted in Fig. 4.

The security features shown in Fig. 4 are meant to reduce fraudulent copying or misuse of the label with the indicium printed on it. For example, colored stripe 404 may be in a color, for example, fluorescent pink, which cannot be easily copied by black and white copiers. Micro-print 406 may include the name of the postage vendor printed in an intricate manner. For example, micro-print 406 may contain the name "Neopost" printed repetitively.

Individual labels may be serialized for increased security and the serial number corresponding to each label may be printed on the label, e.g. serial number 408 depicted in Fig. 4. As part of configuring the user postage request (in step 304 of Fig. 3), the user may be required to enter the serial number of the label on which the indicium is to be printed. PVS 102 may maintain a list of all valid (available and unused) label serial numbers and serial numbers associated with labels may be invalidated by PVS 102 after indicia have been printed on the labels. In this manner, misuse or fraud can be detected if a label serial number received from the user refers to an invalidated serial number.

Logo 410 may display a logo of the postage vendor. In alternative embodiments, logo 410 displayed on label 400 may be selected or customized by the user purchasing the postage. Further, logo 410 need not be pre-printed on label 400, but may be downloaded to user system 104 along with the information for printing the indicium and then printed on label 400 (for example, during step 324 of flowchart 300 depicted in Fig. 3).

The different features printed on label 400 may be printed in special ink to further increase security. The paper on which label 400 is printed may itself be made of or contain special features to reduce fraudulent use. Further details related to the use of security features are discussed in U.S. Application No. 09/611,375 filed July 7, 2000, the entire disclosure of which is herein incorporated by reference for all purposes.

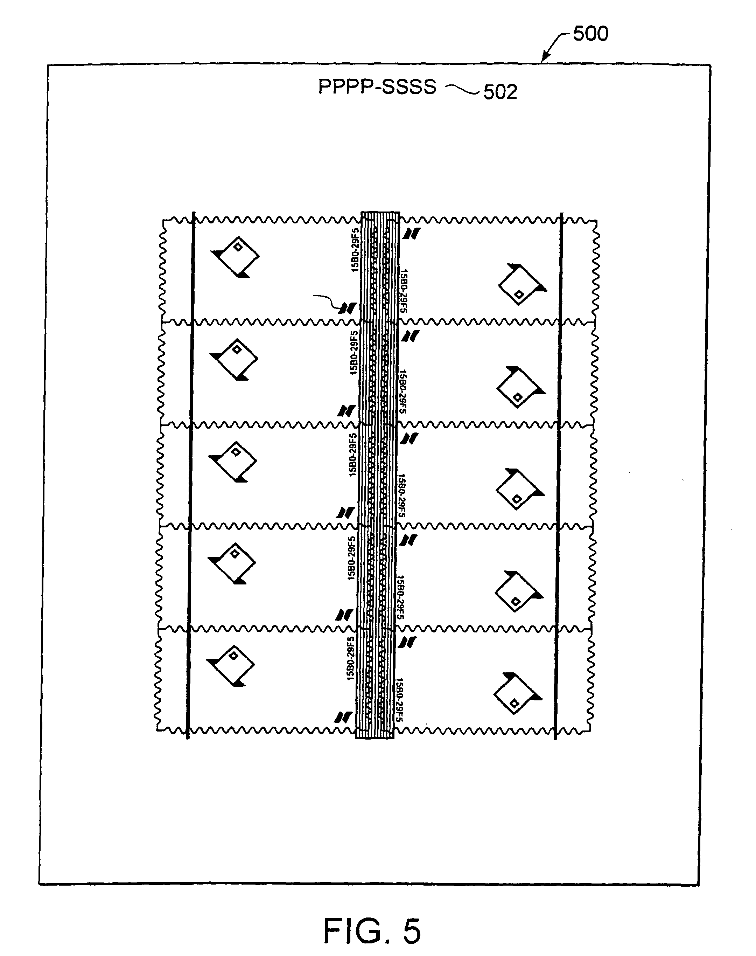

Fig. 5 depicts a sheet 500 of pre-printed labels according to an embodiment of the present invention. As shown in Fig. 5, sheet 500 comprises ten individual pre-printed labels depicted in Fig. 4. The number of individual labels on a sheet may vary in alternative embodiments of the present invention. Individual sheets may be serialized for increased security and a unique serial number corresponding to each sheet may be printed on the sheet, e.g. sheet serial number 502.

As part of configuring the user postage request, the user may be required to enter the unique serial number of the sheet on which the indicium is to be printed. PVS 102 may maintain a list of all available and valid sheet serial numbers and the number of unused labels corresponding to the sheets. After all the labels on a particular sheet have been used, the unique sheet serial number corresponding to the particular sheet may be invalidated by PVS 102. In this manner, misuse or fraud can be detected if the sheet serial number received from the user refers to an invalidated sheet serial number. According to an embodiment of the present invention, label serial number 408 printed on each label of a sheet may be the same as sheet serial number 502. In alternative embodiments, the sheets of labels may be serialized using a first set of numbers, and each of the labels on the sheets may themselves be serialized using a second set of numbers. Serializing both the sheets and the labels provides for increased security.

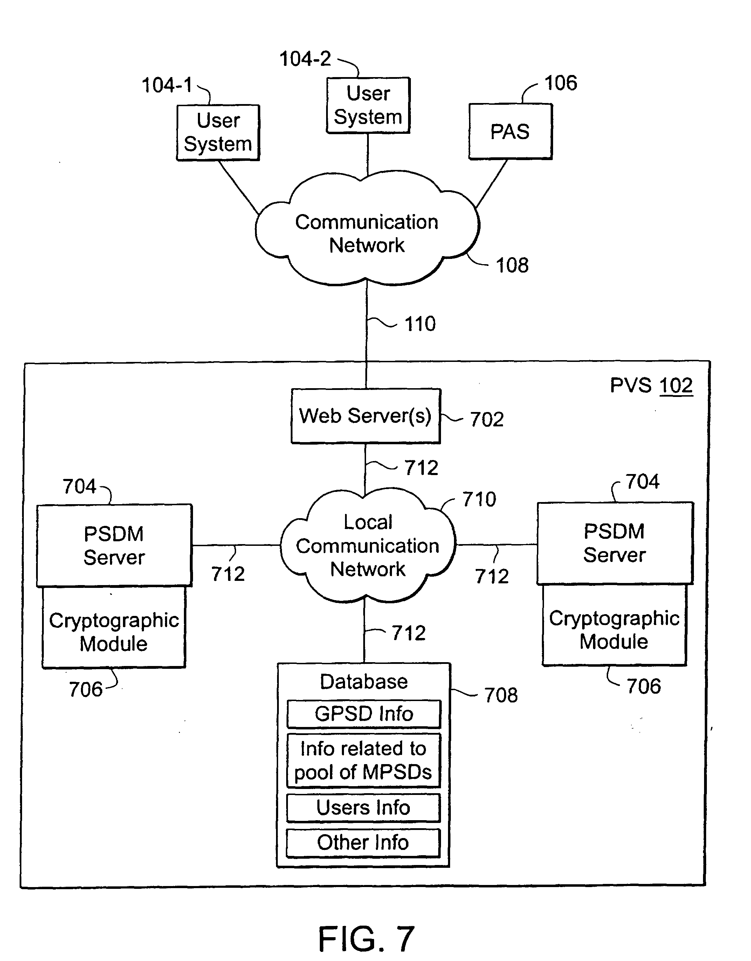

Fig. 6 depicts an individual label 600 with an indicium printed on it according to an embodiment of the present invention. In addition to features of a blank label (described above with respect to Fig. 4), label 600 has an indicium printed on it which may include human readable information and machine readable information. For example, the human readable information of the indicium may include the postage amount or value 602 (e.g. $0.33), the mail class 604 of the postage (e.g. FIRST CLASS), and number 606 (e.g. 042N5DD00038) corresponding to a PSD resource from the pool of PSD resources on PVS 102 which was used to generate the information for printing the indicium. Further details related to the use of PSD resources for generating information for printing the indicium are provided below.

The machine readable portion of the indicium may include a two-dimensional code 608, which may be for example a PDF-417 barcode format, a DataMatrix format, or other format. According to an embodiment of the present invention, two-dimensional code 608 is DataMatrix. The particular contents of the two-dimensional code 608 will be discussed below. According to an embodiment of the present invention, the indicium and the positioning of the indicium on label 600 conform generally to specifications described in the IBIP specifications.

Fig. 7 depicts an expanded block diagram of PVS 102 according to an embodiment of the present invention. As shown in Fig. 7, PVS 102 may comprise one or more web servers 702, one or more postal security device module (PSDM) servers 704 (with associated cryptographic modules 706), and a database 708 coupled to a local communication network 710 via a plurality of communication links 712. Local communication network 710 provides a mechanism for allowing the various components of PVS 102 to communicate and exchange information with each other. Local communication network 710 may itself be comprised of many interconnected computer systems and communication links. Communication links 712 may be hardwire links, optical links, satellite or other wireless communications links, wave propagation links, or any other mechanisms for communication of information. The configuration of PVS 102 depicted in Fig. 7 is merely illustrative of an embodiment incorporating the present invention and does not limit the scope of the invention as recited in the claims. One of ordinary skill in the art would recognize other variations, modifications, and alternatives.

Web server(s) 702 may host the postage vendor's web site and store web pages provided by the postage vendor. Web server 702 is responsible for receiving URL requests from user systems 104 and for forwarding web pages corresponding to the URL requests to the requesting user systems 104. As previously stated, these web pages allow a user to interact with PVS 102. e.g. to configure a request to purchase postage from PVS 102. When user system 104 requests communication with PVS 102, web server may be configured to establish a communication link between user system 104 and PVS 102. For example, web server 702 may establish a secure Internet socket link. e. g. a SSL 2.0 link, between PVS 102 and user system 104. The information communicated between user system 104 and PVS 102 may be SSL encrypted using various encryption levels, e.g. 40-bit encryption, 128-bit encryption, and the like. Web server 702 may also incorporate a firewall which shields the internal PVS network from communication network 108 and user systems 104 and other resources coupled to communication network 108. According to an embodiment of the present invention, web server 702 is responsible for receiving requests from user systems 104 to purchase stamps and for performing load distribution and fail-over processing associated with the requests. Web server 702 may also be configured to control the downloading of printer control programs from PVS 102 to user system 104.

Each PSDM server 704, in conjunction with one or more cryptographic modules 706 coupled to the PSDM server, is responsible for generating the information for printing the indicium in response to requests to buy postage received from one or more user systems 104. According to an embodiment of the present invention, functions performed by PSDM server 704 include functions performed by a Postal Security Device (PSD) as described in the IBIP specifications published by the USPS. For example, functions performed by PSDM server 704 include initialization and creation of PSD resources, digital signature generation, management of funds related to the postage dispensed by PVS 102, generation of information for printing the indicia, key handling, and other functions. PSDM servers 704 are designed to operate in a clustered environment to allow for expandability to meet the needs of a rapidly growing user base. According to an embodiment of the present invention, PSDM server 704 communicates with web server 702 using a DCOM (Microsoft's Distributed Component Object Model) interface.

Each PSDM server 704 may comprise one or more cryptographic modules 706 for performing cryptographic functions and for generating digital signatures. Various keys for performing security-critical functions such as digital signature generation, hashing, encryption, etc. are stored by cryptographic module 706. According to an embodiment of the present invention, cryptographic module 706 is a nCipher nFast/CA module which is validated to FIPS 140-1 Level 3 security.

According to the teachings of the present invention, PSDM server 704 uses PSD resources to generate information for printing indicia and to track monetary amounts related to the postage dispensed by PVS 102. In order to increase the indicia generation throughput, a plurality of shared PSD resources may be used by PSDM servers 704 to generate the indicia. By using a plurality of PSD resources, multiple PSDM servers 704 can run concurrently, producing indicia in parallel without the bottleneck of sharing a single PSD resource.

According to an embodiment of the present invention, each PSD resource comprises a unique PSD identifier (e.g. a 4-byte identifier), a descending register (DR) value (e.g. a 4-byte value), an ascending register (AR) value (e. g. a 5-byte value), and a control code (e.g. a 20-byte value). The PSD identifier uniquely identifies each PSD resource. The ascending register (AR) value represents the total monetary value of all indicia ever produced by the PSD during its life cycle. The descending register (DR) value indicates the available funds assigned to the PSD resource, which may be used to dispense postage. According to an embodiment of the present invention, the monetary values stored by the AR and DR values are measured in 1/10 of 1-cent increments as specified in the IBIP specifications. The control code is a secure hash of the PSD identifier, the PSD AR value, and the PSD DR value. According to an embodiment of the present invention, the control code is generated using HMAC-with-SHA1 (RFC 2104) using a secret HMAC key stored by cryptographic module 706.

According to the teachings of the present invention, monetary amounts related to the postage dispensed by PVS 102 are tracked using a global PSD (GPSD) resource and a pool of PSD resources referred to as mini-PSDs (or MPSDs) stored by PVS 102. According to an embodiment of the present invention, eight MPSD resources may be used by a single cryptographic module 706 associated with PSDM server 704 to concurrently generate information for printing indicia. The sum of the AR value and the DR value of the GPSD resource represents the total amount of postage bought from the postal authority, for example, from the USPS, by the postage vendor provider (e.g. Neopost) of PVS 102. The sum totals of the AR and DR values of the MPSD resources matches the AR and DR values of the GPSD resource. Information related to the GPSD resource and MPSD resources may be stored in database 708.

According to an embodiment of the present invention, each MPSD resource may be assigned a unique number by the postage vendor. A number assigned to a particular MPSD may be included in the information for printing an indicium generated by the particular MPSD and printed as part of the indicium. For example, the number "042N50000058" (reference 606 in Fig. 6) uniquely identifies the MPSD resource which was used for generating the information for printing the indicium depicted in Fig. 6. This MPSD serial number is like a meter number and may be used to track the MPSD resource responsible for generating information for printing the indicium. According to an embodiment of the present invention, the MPSD serial number "042N50000058" may represent a combination of:

"04" - manufacturer identifier assigned by the postal authority to the postage vendor;
"2N" - model identifier (details provided below);

"50000058" -number of MPSD, which in turn may include a global PSD number "0000", a machine number "0", and a PSD number "058." A unique certificate number assigned by a postal authority may also be assigned to each MPSD uniquely identifying the MPSD.

Database 708 acts as a repository for storing information related to the postage dispensing process. For example, database 708 may store information related to the PSD resources (both GPSD and MPSDs), information used for generation of digital signatures, and other like information. Database 708 may also store information about users who have purchased postage from PVS 102. Information related to users who have registered with PVS 102, e. g. user account information, user preferences information, etc. may also be stored by database 708. Database 708 may also store the postal license number assigned to PVS 102 by the postal authority. Other information related to the dispensing of postage may also be stored by database 708. The term "database" as used in this application may refer to a single database or to a plurality of databases coupled to local communication network 710. Further, database 708 may be a relational database, an object-oriented database, a flat file, or any other way of storing information. According to an embodiment, database 708 is coupled to web server 702 and to PSDM server 704 via an ODBC interface.

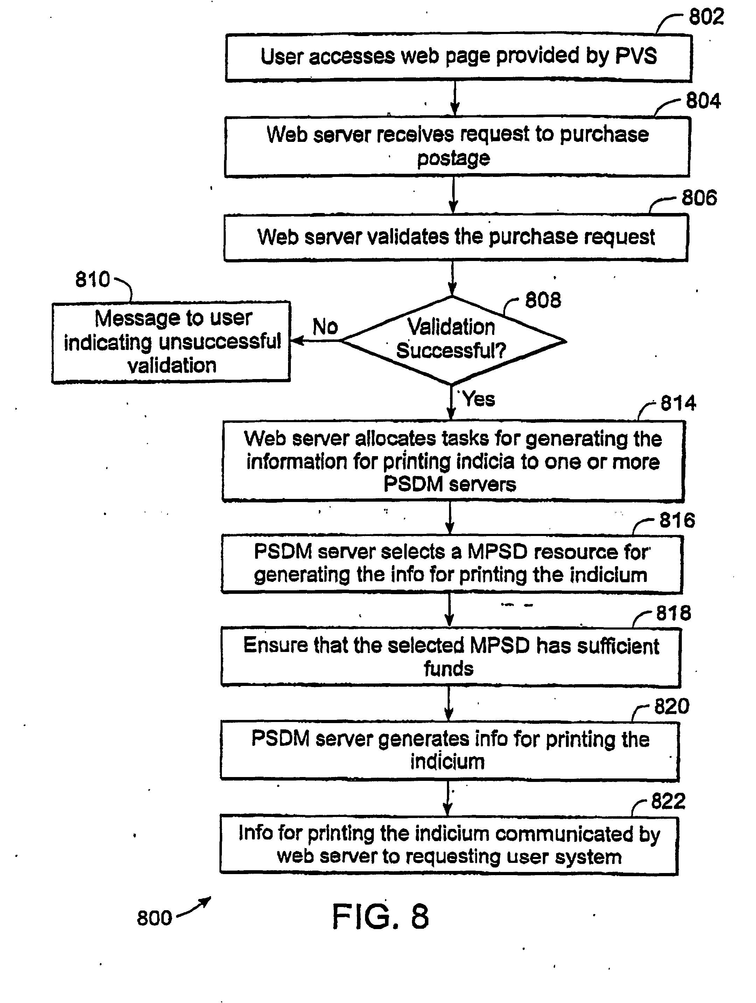

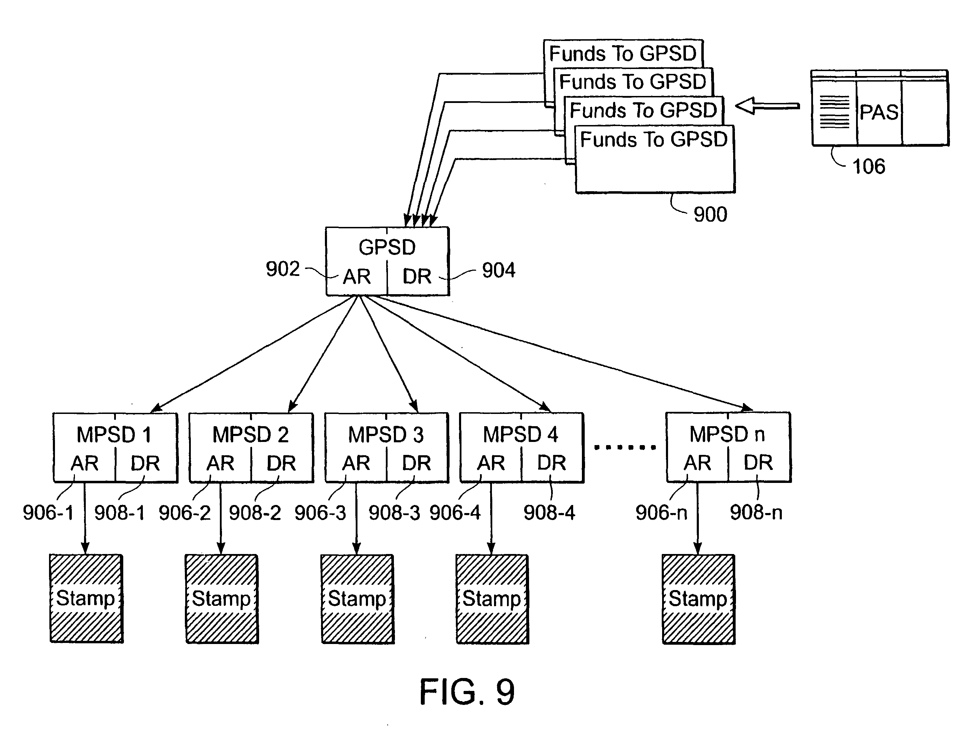

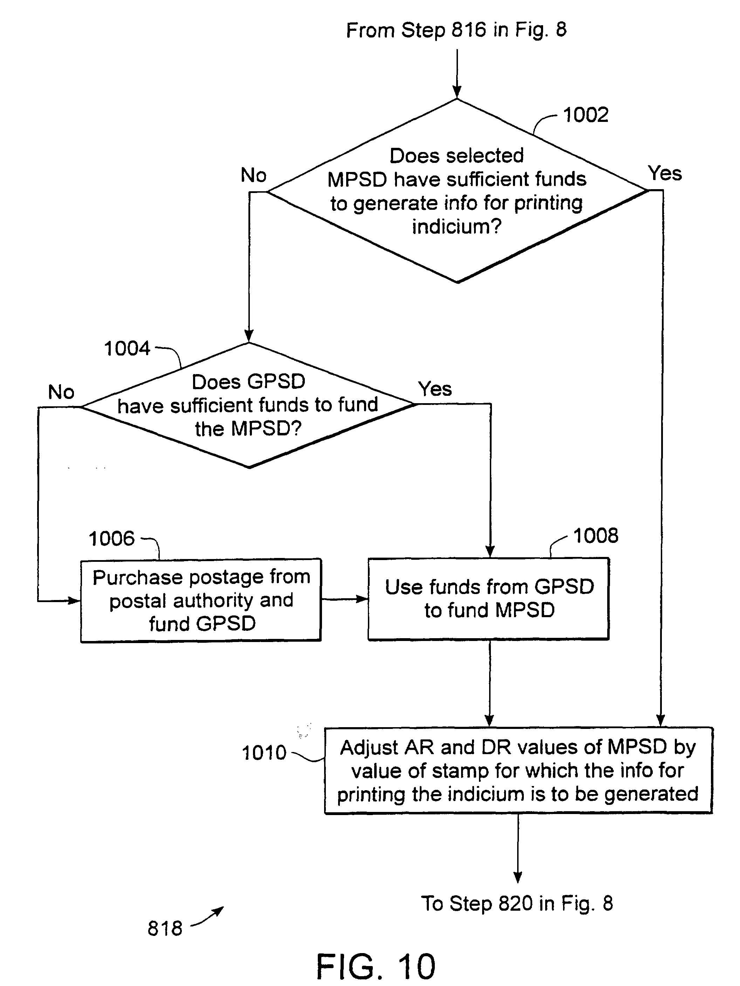

Fig. 8 is a simplified flowchart 800 showing processing performed by the various components of PVS 102 upon receiving a request to purchase postage according to an embodiment of the present invention. As shown in Fig. 8, processing is generally initiated when a user using user system 104 accesses one or more web pages provided by PVS 102 (step 802). Requests to access web pages are generally received by web server 702 which responds by transmitting the requested web pages to requesting user system 104. As part of the communication, web server 702 may establish a SSL connection with user system 104. According to an embodiment of the present invention, web server 702 may also download a print control program, such as an ActiveX control or a Netscape plug-in, to user system 104. The control program may be executed to establish the SSL connection.

Web server 702 may then receive a request from the user to purchase postage (step 804). As previously described with reference to Fig. 3, the request may comprise information such as information identifying the user, a user identifier and a corresponding password if the user is a registered user, credit-card or other like information, the amount and value of the postage to be purchased, the weight of the mail piece/package, and other like information. A user may request the purchase of one or more stamps.

According to an embodiment of the present invention, the user purchase request may be transmitted from user system 104 to PVS 102 in the form of a data structure in Extensible Markup Language (XML), and may comprise the following:

```
<server.bp_RequestWebStampParams>
        <LoginID>TestPrint</LoginID>
        <Amount>330</Amount>
        <RateClass>1100</RateClass>
        <FIM>0</FIM>
        <SerialNumber>1966-F8CF</SerialNumber>
        <CCNameOnCard>Joe Customer</CCNameOnCard>
        <CCNumber>00001111122223333</CCNumber>
        <CCExp>0401</CCExp>
</server.bp_RequestWebStampParams>
```

where:

*<LoginID>TestPrint</LoginID>* is the user's name (or login name or identifier if the user is a registered user);
*<Amount>330</Amount>* is the amount of postage to be purchased in 1/1000 of US$1. For example, 330 = $0.33;
*<RateClass>1100</RateClass>* is the value corresponding to a rate class of the postage, for example, "First Class";
*<FIM>0</FIM>* is a unused legacy field which is set to zero;
*<SerialNumber>1966-F8CF</SerialNumber>* identifies the medium on which the indicium or indicia are to be printed. According to an embodiment of the present invention, this field identifies the serial number of the sheet of labels on which the user intends to print the indicia (assuming that the sheet of labels are serialized). This field may also identify the serial number of the label on which an indicium is to be printed. In embodiments of the present invention where both the labels and the sheets are serialized, this field may include one or more label serial numbers and one or more sheet serial numbers;

*<CCNameOnCard>Joe Customer</CCNameOnCard>* is the user's name as spelled on a credit card which is to be used for consummating the commercial purchase transaction. If the user is a registered user, this field may be blank and PVS 102 may use information provided by the user during registration and stored by PVS 102;

*<CCNumber>000011112223333</CCNumber>* is the credit card number which the user intends to use for billing purposes. If the user is a registered user, this field may be blank and PVS 102 may use credit card information provided by the user during registration and stored by PVS 102; and

*<CCExp>0401</CCExp>* is the credit card expiration date of the credit card which the user intends to use for billing purposes. For the shown example, the format of the date is month-year (MMYY). If the user is a registered user, this field may be blank and PVS 102 may use the information provided by the user during registration and stored by PVS 102.

It should be apparent that the above described data structure merely illustrates an example of the data and the data format which may be included in the user's request to purchase postage which is communicated from user system 104 to PVS 102 and is not meant to limit the scope of this invention as recited in the claims. In alternative embodiments of the present invention, more or less information than that shown above may be included in the user request. Further, various different formats may be used for communicating the information to PVS 102.

Web server 702 may then validate the purchase request received from user system 104 (step 806). As part of the validation step, web server 702 may check the validity of the user, the validity of credit-card information or other like information provided by the user, the validity of information identifying the medium on which the indicia are to be printed, e.g. sheet serial numbers and/or label serial numbers provided by the user, and validity of other information related to the purchase request. Various other validation checks may also be performed according to alternative embodiments of the present invention.

Checking credit card validity may involve checking if the user has provided a valid credit card number, ensuring that the user name on the credit card is valid, ensuring that the credit card has not expired, and getting authorization from the credit card company for the value of the postage and other expenses if any, and other checks. Services provided by companies such as Cybercash and Cybersource may be used to perform the validation. If the user is a registered user with a pre-funded account, web server 702 may determine if the user has sufficient funds in the user's account to pay for the postage to be purchased.

PVS 102 may perform validation of information identifying the medium on which the indicium is to be printed to ensure against fraudulent use of the indicium. As discussed above, serial numbers may be associated with labels or sheets of labels as security measures to reduce misuse of the postage dispensing system. According to an embodiment of the present invention, PVS 102 maintains a list of all valid or unused serial numbers (sheet serial numbers and/or label serial numbers) in database 708. The serial number of a particular label is invalidated after the label has been used. Likewise, the serial number of a particular sheet of labels is invalidated after all the labels on the particular sheet have been used. Accordingly, validation fails if the information in the user request contains an invalid (i.e. used) sheet or label serial number.

Web server 702 then checks if any of the validation checks performed in step 806 failed (step 808). If any validation check failed, web server 702 may send a message back to the requesting user system 104 indicating that the validation was unsuccessful (step 810). The message communicated to user system 104 may also optionally provide reasons for the failure. The user may then be provided a chance to remedy the reason for the validation failure. For example, if the user is a registered user with a pre-funded account, and web server 702 during the validation process determines that the user does not have sufficient funds in his/her account to pay for the requested postage, the user may be offered the choice of adding funds to the account to enable the transaction to be completed, or the user may be allowed to change the purchase request such that the amended request falls within the limits of available funds. Likewise, if the user has inadvertently provided incorrect information e.g. credit card information, the user may be allowed to correct the information and resend the purchase request to PVS 102.

If it is determined in step 808 that the validation checks performed in step 806 were successful, web server 702 then, based on the purchase request, determines the number of stamps for which information for printing the indicium (or indicia) have to be generated and the tasks for generating the information are allocated to one or more PSDM servers 704 (step 814). In this manner, web server 702 distributes the indicium related information generation work load among PSDM servers 704 coupled to local communication network 710. Web server 702 may use different allocation schemes/algorithms to distribute the work among PSDM servers 704.

According to an embodiment of the present invention, web server 702 maintains a list of all PSDM servers 704 coupled to local communication network 710. For example, a list of available PSDM servers 704 may be stored in the Windows NT registry of web server 702. A system administrator may add or remove PSDM servers using a Windows NT registry editor. According to another embodiment, a proxy software (,e.g. C++) class may be provided which stores a list of the available PSDM servers 704. Information related to PSDM servers 704 may also be stored in database 708. Web server 702 may then use an allocation scheme such as a round-robin scheme to distribute the work. For example, if there are two PSDM servers available, web server 702 will alternate sending the tasks of generating information for printing the indicium to the two PSDM servers. According to this embodiment, if the user has requested the purchase of two US$0.33 stamps, the task of generating information for printing the indicium for the first US$0.33 stamp will be allocated to the first PSDM server, and the task of generating information for printing an indicium for the second US$0.33 stamp will be allocated to the second PSDM server. In this manner, web server 702 makes optimal use of available PSDM servers 704. It should be apparent that various other allocations schemes/algorithms may also be used by web server 702.

As stated above, according to an embodiment of the present invention, web server 702 may communicate with PSDM server 704 using a DCOM interface. For example, a DCOM interface such as *"IPSDStation,"* shown below, may be provided having two functional APIs *"CreateIndicium"* and *"GetStatus."*

interface IPSDStation : IUnknown

{

HRESULT CreateIndicium    //Function API call to create an indicium

            ( [in] unsigned long        postage,

            [in,out] struct Indicium*        indicium,

            [out] BSTR*                strError);

HRESULT GetStatus    //Function API to get status of a PSDM server

            ( [out] struct PSDServerStatus*        pStatus);

};

where:

"postage" is the amount/value of postage requested;
"indicium" is a pointer to a *Indicium* structure storing indicium data. The fields of the *Indicium* structure are described below;
"strError" contains an error message if the creation of indicium data was prevented due to an error; and
"pStatus" points to a *PSDServerStatus* structure containing information used for monitoring the performance of a PSDM server.

The *PSDServerStatus* structure includes:

struct PSDServerStatus{

            long    Uptime;

            long    Throughput;

            long    Load;

            long    Total};

where:

"Uptime" indicates how long the PSDM server has been running in days/hours/minutes/seconds;
"Throughput" indicates the number of indicia requests being handled by the PSDM server per second;
"Load" indicates the percentage of load based on the number of virtual PSDs in use; and
"Total" indicates the total number of indicia generated by the PSDM server.

Referring back to Fig. 8, after the task to generate information for printing an indicium for a stamp has been assigned to a PSDM server 704, the PSDM server to which the task has been assigned then selects a MPSD resource to be used for generating the information for printing the indicium (step 816). According to an embodiment of the present invention, when PSDM server 704 is initialized, for example during system startup, PSDM server 704 acquires exclusive rights to one or more MPSD resources stored in database 708 which will be used to service requests for indicia generation. In essence, PSDM server 704 "checks out" one or more MPSD resources from database 708. In a specific embodiment, each PSDM server 704 equipped with a cryptographic module 706 checks out up to eight MPSD resources. After obtaining exclusive rights to the pool of MPSD resources, PSDM server 704 goes online and waits for requests to generate information for printing indicia. Accordingly, when PSDM server 704 receives a request to generate information for printing an indicium from web server 702, PSDM server 704 selects one of the previously checked out MPSD resources for generating the information.

According to an embodiment of the present invention, as part of step 816, if no MPSD resources are available for use when requested from database 708, a new MPSD resource may be automatically generated. The new MPSD resource is assigned a unique identifier, its AR and DR values are set to zero, and a control code value is assigned to it. The requesting PSDM server 704 is then allowed to check out the new MPSD resource. A signal is communicated to PSDM server 704 indicating that the MPSD resource is new, and this causes PSDM server 704 to make a request to add funds (i.e. add funds to the DR value of the MPSD resource) to the MPSD resource to make it usable. The process of funding a MPSD resource is described below.

PSDM server 704 may then ensure that the selected MPSD resource has sufficient funds to satisfy the postage request (step 818). If the selected MPSD resource does not have sufficient funds to satisfy the postage request, then PSDM server 704 may perform processing to fund the selected MPSD resource. Further details regarding processing performed by PSDM server 704 to fund the selected MPSD resource are explained below with respect to Fig. 10.

PSDM server 704 then generates the information for printing the requested indicium using the selected (and sufficiently funded) MPSD (step 820). PSDM server 704 adjusts the AR and DR values of the selected MPSD resource corresponding to the value of the requested stamp for which indicium is to be generated. The AR value of the selected MPSD resource is increased by the amount of the stamp while the DR value of the selected MPSD resource is decreased by the stamp value. The AR and DR values for the MPSDs along with other information related to the MPSDs may be stored in database 708.

The information for printing the indicium generated in step 820 includes a digital signature signed by cryptographic module 706 coupled to PSDM server 704. Several different digital signature algorithms may be used to generate the digital signature. These include algorithms identified in the IBIP specifications such the Digital Signature Algorithm (DSA), the Rivest Shamir Adleman (RSA) Algorithm, the Elliptic Curve Digital Signature Algorithm (ECDSA), and others. The digital signature methodology provides data integrity and non-repudiation services. According to an embodiment of the present invention, the digital signature generated by PSDM server 704 generally complies with the digital signature requirements specified in the IBIP specifications.

According to a specific implementation of the present invention, the digital signature is signed using a DSA private key, for example, a 1024-bit DSA key, stored by cryptographic module 706. Cryptographic module 706 may also store additional keys, such as a key used for hashing purposes, and others. According to an embodiment of the present invention, a Hash-based Message Authentication Code (HMAC) key is stored by cryptographic module 706 and used for hashing. In order to protect the identity of the private and other keys, cryptographic module 706 may use a master key to encrypt the stored keys. This master key is generally internally stored and cannot be exported in any way outside of cryptographic module 706. According to an embodiment of the present invention, a Triple Digital Encryption Standard (3DES) master key is used to encrypt the other keys.

The various keys stored by cryptographic module 706 are generally created when PSDM server 704 is initialized. The private key, hashing key, and other keys are created, encrypted using the master encryption key and then internally stored by cryptographic module 706. The public key corresponding to the private key used for signing the information for printing the indicium, for example a public DSA key corresponding to the private DSA key stored by cryptographic module 706, is then sent to the postal authority to receive a certificate serial number. The certificate serial number is stored in database 708 and used by PSDM server 704 in the indicium generation process.

As part of step 820, data related to the process of generating information for printing the indicium may be stored in database 708. For example, financial information, user information, and other information related to generation of information for printing the indicium may be stored in database 708 by PSDM server 704 and associated cryptographic module 706. This information may be downloaded to PAS 106 at periodic intervals.

The information for printing the indicium generated in step 820 is then forwarded by PSDM server 704 to web server 702 which communicates the information to requesting user system 104 (step 822). As described above, according to an embodiment of the present invention, PSDM server 704 may use a DCOM interface (e.g. the *IPSDStation* interface described above) to forward the generated indicium to web server 702. For example, a call to the *"CreateIndicium"* API (described above) returns a pointer to an *Indicium* structure which is included in the information for printing the information and which contains data representing the indicium. The contents of the *Indicium* data structure may include:

```
                              struct Indicium

                              {
                                      byte VersionNo;

                                      byte AlgorithmID;

                                      byte CertificateSerialNo[4];

                                      char ManufacturerID[2];

                                      char ModelID[2];

                                      byte SerialNo[4];

                                      byte AscendingRegister[5];

                                      byte Postage[3];

                                      byte Date[4];

                                      byte ZIP[4];

                                      byte UserID[5];

                                      byte StampSerialNo[6];

                                      byte DescendingRegister[4];

                                      char RateCategory[4];

                                      byte DigitalSignature[40];

                              };
```

where:

*"VersionNo"* data field represents the version number assigned by the postal authority, for example, the USPS, to the indicia data set. A 1-byte binary value may be used to represent this data field;

*"AlgorithmID"* data field identifies the digital signature algorithm used to create the digital signature in the indicium. A 1-byte binary value may be used to represent this data field;

*"CertificateSerialNo"* data field represents a unique serial number of the PSD certificate issued by the IBIP Certificate Authority (e.g. USPS). A 4-byte binary value may be used to represent this data field;

*"ManufacturerID"* data field represents the USPS-assigned identifier for the postage vendor. For example, the manufacturer identifier " 04" may be assigned to Neopost. A 2-character ASCII text may be used to represent this data field;

*"ModelID"* data field represents the model number assigned by a postal authority (e.g. the USPS) to the product model used for generating the information for printing the indicium. A 2-character ASCII text may be used to represent this data field e.g. "2N". According to the IBIP specifications, the first character is this data field is a numeric value (0-9) and the second character is an alphanumeric value (A-Z);

*"SerialNo"* data field represents the serial number of the MPSD used to generate the indicium data. A 4-byte binary value may be used to represent this data field;

*"AscendingRegister"* data field represents the total monetary value of all indicia ever generated by the MPSD during its life cycle. A 5-byte binary value may be used to represent this data field;

*"Postage"* data field represents the amount of postage applied for this specific indicium. This data field may be represented using a 3-byte binary value in numeric format. This data field supports the maximum amount of postage due on a single piece of mail in any mail class supported by the mail system;

*"Date"* data field represents the date the indicium was printed (from the PSDM serve's clock). This data field may be represented using a 4-byte binary value in the format YYYYMMDD);

*"ZIP"* data field represents the ZIP of the user requesting the indicium (also called the originating user). This data field may be represented using a 4-byte binary value in 5-digit numeric format;

*"UserID"* data field identifies the user requesting the indicium. For example, this field may contain the name of the user. This data field may be represented using a 5-byte binary value;

*"StampSerialNo"* data field is a combination field. The first section (e.g. the first byte) of the field may represent a system software identification number for the PVS software. The second section (e.g. the remaining 5-bytes) of this field may represent the serial number of the label on which the indicium is printed. For example, stamp serial number is Fig. 6 is "13DA-5F45" (reference 408);

*"DescendingRegister"* data field represents the postage value remaining on the MPSD. This data field may be represented using a 4-byte binary value;

*"RateCategory"* data field represents the postage class for the indicium and rate, including any presort discount level. The rate values for this field are usually provided by the postal authority, for example, the USPS. This data field may be represented using a 4-byte binary value; and

*"DigitalSignature"* data field represents the digital signature. The size of this data field is a function of the digital signature algorithm used for generating the digital signature. According to an embodiment of the present invention, a 40-byte value may be used for this field for a DSA digital signature.

The information for printing the indicium downloaded to requesting user system 104 may include various types of information representing the indicium (or indicia). According to an embodiment of the present invention, a bitmap or a graphical image representing the indicium may be included in the information for printing the indicium. According to another embodiment of the present invention , indicium data or a data structure comprising information representing the indicium may be included in the information for printing the indicium. According to yet another embodiment of the present invention, a data structure in XML format may be included. According to an embodiment of the present invention, the XML format for the data structure may be as follows:

```
<Indicium>
        <MeterNumber>042N50000061</MeterNumber>
        <RateClass>1100</RateClass>
        <FIM>0</FIM>
        <LPO>Warrenton, VA</LPO>
        <Amount>330</Amount>
        <Matrix>AgFA4gEAMDQyTr3w+gIikQEAAEoBAP8uMQEAAAAA
Hh0AAACuBwAAAAAesQ0AMTEwMKHVkp9AoLIvuCxwwowCZT35n5nxxFKfC4VU6
s3i22eQbgPaFQCH53g=</Matrix>
        </Indicium>
```

where:

*<MeterNumber>042N50000061</MeterNumber>* is the unique serial number of the MPSD used for generating the indicium data structure;

*<RateClass>1100</RateClass>* is a value corresponding to a rate class, for example "First Class";

*<FIM>0</FIM>* is a reserved field set to 0,

*<LPO>Warrenton, VA</LPO>* is an optional origin address;

*<Amount>330</Amount>is* an amount of postage in 1/1000 of US$1, for example, 330 = $0.33; and

*<Matrix>AgFA4gEAMDQyTr3w+glikQEAAEoBAP8uMQEAAAAAHh0AAACuBwAAAA AesQ0AMTEwMKHVkp9AoLIvuCxwwowCZT35n5nxxFKfC4VU6s3i22eQbgPaFQCH53      g=</Matrix>* is Base64-encoded binary data representing the indicium data (89 bytes) that is printed as the machine-readable portion of the indicium. The indicium data encoded in the *Matrix* section may have the format of *strucrure Indicium* described above.

The information for printing the indicium received by user system from PVS 102 may then be printed using a printer device coupled to user system 104. The information may also be stored on a computer-readable storage media for subsequent printing of the indicium. In a specific embodiment of the present invention, user system 104 may convert the indicium data included in the information for printing the indicium to an indicium before printing. As previously stated, the indicium may be printed on any medium such as a label, sheet of labels, sheet of paper, directly on the mail piece itself, on an envelope, card, etc., but in preferred embodiments the indicia are printed on serialized label stock, possibly incorporating additional security features.

As described above, PVS 102 performs and manages funds related to the postage dispensing process via a GPSD resource and MPSD resources. According to an embodiment of the present invention, when PVS 102 is first initialized or booted up, all the AR and DR values of the GPSD resource and the MPSD resources are set to zero. PVS 102 may then fund the GPSD resource by making a fund purchase from PAS 106. For example, PVS 102 may buy US$100,000.00 worth of postage from the USPS. After this purchase, the DR value of the GPSD is set to US$100,000.00. The GPSD may then be used to fund the MPSD resources to make them usable to generate information for printing indicia.

Fig. 9 depicts relationships between the AR and DR values of the GPSD resource and the MPSD resources. As shown in Fig. 9, funds 900 may be purchased from postal authority 106 and added to the DR value 904 of the GPSD resource. The summation of the AR 902 and DR 904 values of the GPSD resource indicate the total funds purchased from the postal authority (see Equation (1) below). The funds may then used to fund the individual MPSD resources in order to prepare them for generating information for printing indicia. Each time a MPSD resource is funded for a particular amount, the AR value 902 of the GPSD resource is increased by the particular amount and the DR value 904 of the GPSD resource is decreased by the particular amount. The particular amount is added to the DR value 908 of the MPSD resource being funded. The summation of the ARs 906-1, 906-2, ... 906-n (hereinafter referred to generically as ARs 906) and DRs 908-1, 908-2, ..., 908-n (hereinafter referred to generically as DRs 908) of the individual MPSD resources equals the AR value 902 of the GPSD resource (see Equation (2) below). Each time an MPSD resource generates information for printing an indicium for a stamp, the value of the stamp is deducted from the MPSD resource's DR value 908 and added to the MPSD resource's AR value 906. A single MPSD resource may be used to generate information for printing indicia for a plurality of stamp requests received from a plurality of users. Accordingly, the present invention allows an AR/DR pair associated with a MPSD resource to be shared between a plurality of users. The following equations provide mathematical representations of the relationships:

$$GPSD[AR] + GPSD[DR] = \sum_{i=1}^{k} USPS\ Fund_i \quad ----\ Equation\ (1)$$

$$GPSD[AR] = \sum_{i=1}^{n} MPSD_i[AR] + MPSD_i[DR] \quad ----\ Equation\ (2)$$

As described above, if the DR value of the selected MPSD resource is lower than the value of the stamp for which the MPSD has to generate information for printing an indicium, it implies that the MPSD does not have sufficient funds to generate the indicium and that the MPSD has to be funded before the information for printing the indicium can be generated.

Fig. 10 is a simplified flowchart showing additional details of step 818 in Fig. 8 showing processing performed by PVS 102 for funding a MPSD resource according to an embodiment of the present invention. After PSDM server 704 has selected a MPSD resource to generate information for printing the indicium corresponding to a stamp (step 816 in Fig. 8), PSDM server 704 determines if the selected MPSD resource has sufficient funds to generate the information based on the value of stamp (step 1002). This may be accomplished by comparing the DR value of the selected MPSD resource with the value of the stamp.

If the DR value of the selected MPSD resource is greater than or equal to the value of the stamp, this indicates that the selected MPSD resource has sufficient funds to generate information for printing the indicium corresponding to the stamp, and processing continues with step 1010 during which the AR and DR values of the selected MPSD resource are adjusted by the value of the stamp. During step 1010, the DR value of the MPSD resource is decremented by the value of the stamp and the AR value of the MPSD resource is incremented by the value of the stamp. Processing then continues with step 820 in Fig. 8 during which the information for printing the indicium is generated. It should be apparent that step 1010 may also be performed as part of step 820 in Fig. 8. Further, according to alternative embodiments of the present invention, the AR and DR values of the selected MPSD may be adjusted after the information for printing the indicium has been generated.

If it is determined in step 1002 that the DR value of the selected MPSD resource is less than the value of the stamp, thereby indicating that the MPSD resource does not have sufficient funds to satisfy the request, PSDM server 704 attempts to fund the MPSD resource by using funds from the GPSD resource. According to an embodiment of the present invention, PSDM server 704 may be configured to transfer a pre-set fund amount from the GPSD resource to the selected MPSD resource. For example, the pre-set amount may be set to US$1,000.00. This pre-set amount is configurable by the postage vendor. In alternative embodiments of the present invention, the GPSD resource may fund the MPSD resource for an amount requested by the MPSD resource, or some other amount.

In order to fund the MPSD resource from the GPSD resource, PSDM server 704 determines if the GPSD resource has sufficient funds to fund the selected MPSD (step 1004). For example, PSDM server 704 may determine if the GPSD has at least the pre-set amount of funds to be transferred to the MPSD resource. PSDM server 704 accomplishes this by comparing the DR value of the GPSD resource with the pre-set amount in step 1004. If the DR value of the GPSD resource is greater than or equal to the pre-set amount, this indicates that the GPSD resource has sufficient funds to fund the MPSD resource, and the pre-set amount is transferred from the GPSD resource to the MPSD resource (step 1008). As part of step 1008, the DR value of the GPSD resource is decremented by the amount transferred to the MPSD resource and the AR value of the GPSD resource is incremented by the amount transferred to the MPSD resource. Further, the DR value of the MPSD resource is incremented by the amount transferred to the MPSD resource from the GPSD resource. Processing then continues with step 1010 as described above.

If PSDM server 704 determines in step 1004 that the DR value of the GPSD resource is less than the amount to be transferred to the MPSD resource, this indicates that the GPSD resource does not have sufficient funds to fund the MPSD resource. In this scenario, the GPSD resource may be funded by making a purchase from the postal authority (step 1006). As part of step 1006, the postage value purchased from the postal authority is added to the GPSD resource's DR value. In alternative embodiments of the present invention, the GPSD resource may also be funded at periodic time intervals or based on other criteria. Processing then continues with step 1008 wherein the MPSD resource is funded using funds from the GPSD resource. Processing then continues with step 1010 as described above.

As described above, the present invention provides techniques for dispensing postage using a communication network such as the Internet. PVS 102 generates information for printing indicia corresponding to requests to purchase stamps received from one or more user systems 104. According to the teachings of the present invention, a single postal license number is assigned to each PVS 102 which is then used to cater to postage requests from a plurality of users who may be at different addresses. In this manner, PVS 102 shares the single postal license number between a plurality of users. The postage consumer is thus shielded from the procedural inconveniences of obtaining a postal license number. In fact, the consumer of the postage does not even have to be aware of a postal license number.

Additionally, as described above, all monetary matters related to the generation of the information for printing indicia are handled by PVS 102 using a GPSD and a pool of MPSD resources. A particular MPSD resource may be used to generate information for printing an indicium for a plurality of different users. Accordingly, the AR and DR values of PVS 102 may be shared between several users and postage requests. This is substantially different from conventional techniques wherein each user has a unique AR and DR value associated with the user which cannot be shared between users.

Although specific embodiments of the invention have been described, various modifications, alterations, alternative constructions, and equivalents are also encompassed within the scope of the invention. The described invention is not restricted to operation within certain specific data processing environments, but is free to operate within a plurality of data processing environments. Additionally, although the present invention has been described using a particular series of transactions and steps, it should be apparent to those skilled in the art that the scope of the present invention is not limited to the described series of transactions and steps.

Further, while the present invention has been described using a particular combination of hardware and software, it should be recognized that other combinations of hardware and software are also within the scope of the present invention. The present invention may be implemented only in hardware or only in software or using combinations thereof.

**Claims**

1. In a network environment comprising a plurality of user systems coupled to a postage vendor system (102) comprising a plurality of server systems, a method of dispensing postage comprising at the postage vendor system (102):

   receiving a first request from a first user system (104-1) from the plurality of user systems requesting purchase of a first stamp;

receiving a second request from a second user system (104-2) from the plurality of user systems requesting purchase of a second stamp;

in response to the first request, generating information for printing a first indicium corresponding to the first stamp based upon a single license number assigned by a postal authority and associated with the postage vendor system (102);

in response to the second request, generating information for printing a second indicium corresponding to the second stamp based upon the single license number associated with the postage vendor system (102);

communicating the information for printing the first indicium to the first user system (104-1); and

communicating the information for printing the second indicium to the second user system (104-2).

2. The method of claim 1 further comprising printing the first indicium at the first user system based upon the information for printing the first indicium received from the postage vendor system.

3. The method of claim 2 wherein:

the first request includes information identifying a medium on which the first indicium is to be printed;

generating the information for printing the first indicium corresponding to the first stamp comprises:

validating the information identifying the medium on which the first indicium is to be printed; and

generating the information for printing the first indicium only if the information identifying the medium on which the first indicium is to be printed is determined by the postage vendor system to be valid; and

printing the first indicium comprises printing the first indicium on the medium.

4. The method of claim 3 wherein the medium on which the first indicium is printing is a label and the information identifying the medium is a serial number associated with the label.

5. The method of claim 3 wherein the medium on which the first indicium is printed is a label from a sheet of labels and the information identifying the medium is a serial number associated with the sheet of labels.

6. The method of claim 2 wherein:

the first request includes information identifying a first user and credit-card information; and

generating the information for printing a first indicium corresponding to the first stamp comprises:

validating the information identifying the first user and the credit-card information; and

generating the information for printing the first indicium only if the information identifying the first user and the credit-card information is determined by the postage vendor system to be valid.

7. The method of claim 1 wherein generating the information for printing the first indicium comprises:

selecting a first server system from the plurality of server systems of the postage vendor system to generate the information for printing the first indicium; and

generating the information for printing the first indicium using the first server system.

8. The method of claim 7 wherein selecting the first server system from the plurality of server systems comprises:

storing, at the postage vendor system, a list of server systems which may be used to generate information for printing the first indicium; and

selecting the first server system from the list of server systems according to a selection procedure.

9. The method of claim 8 wherein the selection procedure comprises a round-robin selection procedure.

10. The method of claim 7 wherein generating the information for printing the first indicium using the first server system comprises:

generating a digital signature using a cryptographic module associated with the first sever system; and

including the digital signature in the information for printing the first indicium.

11. The method of claim 7 wherein generating the information for printing the first indicium using the first server system comprises:

> selecting a first postal security device (PSD) resource from a plurality of PSD resources stored by the postage vendor system;
> determining if funds associated with the first PSD resource are at least equal to the value of the first stamp;
> if it is determined that the funds associated with the first PSD resource are less than the value of the first stamp, adding funds to the funds associated with the first PSD resource; and
> generating the information for printing the first indicium using the first PSD resource.

12. The method of claim 7 wherein generating the information for printing the first indicium using the first server system comprises:

> selecting a first postal security device (PSD) resource from a plurality of PSD resources stored by the postage vendor system;
> decreasing a first value associated with the first PSD resource by a value to the first stamp;
> increasing a second value associated with the first PSD resource by the value of the first stamp; and
> generating the information for printing the first indicium using the first PSD resource.

13. The method of claim 12 wherein generating the information for printing the second indicium comprises:

> selecting the first server system from the plurality of server systems of the postage vendor system to generate the information for printing the second indicium;
> selecting the first postal security device (PSD) resource for generating the information for printing the second indicium;
> decreasing the first value associated with the first PSD resource by a value of the second stamp;
> increasing the second value associated with the first PSD resource by the value of the second stamp; and
> generating the information for printing the second indicium using the first PSD resource.

14. The method of claim 12 wherein generating the information for printing the second indicium comprises:

> selecting the first server system from the plurality of server systems of the postage vendor system to generate the information for printing the second indicium;
> selecting a second postal security device (PSD) resource from the plurality of PSD resources stored by the postage vendor system for generating the information for printing the second indicium;
> decreasing a first value associated with the second PSD resource by a value of the second stamp;
> increasing a second value associated with the second PSD resource by the value of the second stamp; and
> generating the information for printing the second indicium using the second PSD resource.

15. The method of claim 7 wherein generating the information for printing the second indicium comprises:

> selecting a second server system from the plurality of server systems of the postage vendor system to generate the information for printing the second indicium; and
> generating the information for printing the second indicium using the second server system.

16. The method of claim 1 wherein:

> the first user system is located at a first address, and
> the second user system is located at a second address different from the first address.

17. A system for dispensing postage comprising:

> a communication network (108);
> a plurality of data processing systems coupled to the communication network, the plurality of data processing systems including a first data processing system (104-1) and a second data processing system (104-2); and
> a postage vendor system (102) coupled to the communication network, the postage vendor system comprising a plurality of server systems and a database,

wherein the postage vendor system (102) is configured to:

receive a first request from the first data processing system (104-1) requesting purchase of a first stamp;
receive a second request from a second data processing system(104-2) requesting purchase of a second stamp;
in response to the first request, generate information for printing a first indicium corresponding to the first stamp based upon a single license number assigned by a postal authority and associated with the postage vendor system;
in response to the second request, generate information for printing a second indicium corresponding to the second stamp based upon the single license number associated with the postage vendor system (102);
communicate the information for printing the first indicium to the first data processing system (104-1); and
communicate the information for printing the second indicium to the second data processing system (104-2).

18. The system of claim 17 wherein the first data processing system is configured to print the first indicium based upon the information for printing the first indicium received from the postage vendor system.

19. The system of claim 18 wherein:

the first request includes information identifying a medium on which the first indicium is to be printed;
the postage vendor system is configured to generate the information for printing the first indicium corresponding to the first stamp by:

validating the information identifying the medium on which the first indicium is to be printed; and
generating the information for printing the first indicium only if the information identifying the medium on which the first indicium is to be printed is determined by the postage vendor system to be valid; and

the first data processing system is configured to print the first indicium on the medium.

20. The system of claim 19 wherein the medium on which the first indicium is printed is a label and the information identifying the medium is a serial number associated with the label.

21. The system of claim 19 wherein the medium on which the first indicium is printed is a label from a sheet of labels and the information identifying the medium is a serial number associated with the sheet of labels.

22. The system of claim 18 wherein:

the first request includes information identifying a first user and credit-card information; and
the postage vendor system is configured to generate the information for printing the first indicium corresponding to the first stamp by:

validating the information identifying the first user and the credit-card information; and
generating the information for printing the first indicium only if the information identifying the first user and the credit-card information is determined by the postage vendor system to valid.

23. The system of claim 17 wherein the plurality of server systems of the postage vendor system includes a first server system,
wherein the first server system is configured to:

receive the first request;
select a second server from the plurality of server systems to generate the information for printing the first indicium; and

wherein the second server system is configured to generate the information for printing the first indicium.

24. The system of claim 23 wherein the database is configured to store a list of server systems which may be used to generate information for printing the first indicium, and the first server system is configured to select the second server system from the list of server systems by applying a selection procedure.

**25.** The system of claim 24 wherein the selection procedure comprises a round-robin selection procedure.

**26.** The system of claim 23 wherein the second server system is coupled to a cryptographic module configured to generate a digital signature, and the second server is configured to include the digital signature in the information for printing the first indicium.

**27.** The system of claim 23 wherein in order to generate the information for printing the first indicium the second server system is configured to:

select a first postal security device (PSD) resource from a plurality of PSD resources stores by the postage vendor system;
determine if funds associated with the first PSD resource are at least equal to the value of the first stamp;
add funds to the funds associated with the first PSD resource if the funds associated with the first PSD resource are less than the value of the first stamp, and
generate the information for printing the first indicium using the first PSD resource.

**28.** The system of claim 23 wherein in order to generate the information for printing the first indicium the second server system is configured to:

select a first postal security device (PSD) resource from a plurality of PSD resources stored by the postage vendor system;
decrease a first value associated with the first PSD resource by a value of the first stamp;
increase a second value associated with the first PSD resource by the value of the first stamp; and
generate the information for printing the first indicium using the first PSD resource.

**29.** The system of claim 28 wherein:

the first server system in configured to:

receive the second request;
select the second server from the plurality of server systems to generate the information for printing the second indicium; and

the second server system is configured to:

select the first postal security device (PSD) resource for generating the information for printing the second indicium;
decrease the first value associated with the first PSD resource by a value of the second stamp;
increase the second value associated with the first PSD resource by the value of the second stamp; and
generate the information for printing the second indicium using the first PSD resource.

**30.** The system of claim 28 wherein:

the first server system is configured to:

receive the second request; and
select the second server from the plurality of server systems to generate the information for printing the second indicium; and

the second server system is configured to:

select a second security device (PSD) resource from the plurality of PSD resources stored by the postage vendor system for generating the information for printing the second indicium;
decrease a first value associated with the second PSD resource by a value of the second stamp;
increase a second value associated with the second PSD resource by the value of the second stamp; and
generate the information for printing the second indicium using the second PSD resource.

**31.** The system of claim 23 wherein:

the first server system is configured to:

receive the second request;
select a third server from the plurality of server systems to generate the information for printing the second indicium; and

wherein the third server system is configured to generate the information for printing the second indicium.

**32.** The system of claim 17 wherein:

the first data processing system is located at a first address and coupled to the postage vendor system via the communication network; and
the second data processing system is located at a second address different from the first address and coupled to the postage vendor system via the communication network.

**33.** A computer program product stored on a computer-readable medium for dispending postage in a network environment (108) comprising a plurality of user systems coupled to a postage vendor system (102), the postage vendor system (102) comprising a plurality of server systems, the computer program product comprising:

code for receiving a first request from a first user system (104-1) from the plurality of user systems requesting purchase of first stamp;
code for receiving a second request from a second user system (104-2) from the plurality of user systems requesting purchase of a second stamp;
in response to the first request, code for generating information for printing a first indicium corresponding to the first stamp based upon a single license number assigned by a postal authority and associated with the postage vendor system (102);
in response to the second request, code for generating information for printing a second indicium corresponding to the second stamp based upon the single license number associated with the postage vendor system (102);
code for communicating the information for printing the first indicium from the postage vendor system to the first user system (104-1); and
code for communicating the information for printing the second indicium from the postage vendor system to the second user system (104-2).

**34.** The computer program product of claim 33 further comprising code for printing the first indicium at the first user system based upon the information for printing the first indicium received from the postage vendor system.

**35.** The computer product of claim 34 wherein:

the first request includes information identifying a medium on which the first indicium is to be printed;
the code for generating the information for printing the first indicium corresponding to the first stamp comprises:

code for validating the information identifying the medium on which the first indicium is to be printed; and
code for generating the information for printing the first indicium only if the information identifying the medium on which the first indicium is to be printed is determined by the postage vendor system to be valid; and

the code for printing the first indicium comprises code for printing the first indicium on the medium.

**36.** The computer program product of claim 35 wherein the medium on which the first indicium is printed is a label and the information identifying the medium is a serial number associated with the label.

**37.** The computer program product of claim 35 wherein the medium on which the first indicium is printed is a label from a sheet of labels and the information identifying the medium is a serial number associated with the sheet of labels.

**38.** The computer program product of claim 34 wherein:

the first request includes information identifying a first user and credit-card information; and
the code for generating the information for printing a first indicium corresponding to the first stamp comprises:

> code for validating the information identifying the first user and the credit-card information; and
> code for generating the information for printing the first indicium only if the information identifying the first user and the credit-card information is determined by the postage vendor system to be valid.

39. The computer program product of claim 33 wherein the code for generating the information for printing the first indicium comprises:

> code for selecting a first server system from the plurality of server systems of the postage vendor system to generate the information for printing the first indicium; and
> code for generating the information for printing the first indicium using the first server system.

40. The computer program product of claim 39 wherein the code for selecting the first server system from the plurality of server systems comprises:

> code for selecting the first server system from a list of server systems which may be used to generate information for printing the first indicium according to a selection procedure.

41. The computer program product of claim 40 wherein the selection procedure comprises a round-robin selection procedure.

42. The computer program product of claim 39 wherein the code for generating the information for printing the first indicium using the first server system comprises:

> code for generating a digital signature using a cryptographic module associated with the first server system; and
> code for including the digital signature in the information for printing the first indicium.

43. The computer program product of claim 39 wherein the code for generating the information for printing the first indicium using the first server system comprises:

> code for selecting a first postal security device (PSD) resource from a plurality of PSD resources stored by the postage vendor system;
> code for determining if funds associated with the first resource are at least equal to the value of the first stamp;
> if it is determined that the funds associated with the first PSD resource are less than the value of the first stamp, code for adding funds to the funds associated with the first PSD resource, and
> code for generating the information for printing the first indicium using the first PSD resource.

44. The computer program product of claim 39 wherein the code for generating the information for printing the first indicium using the first server system comprises:

> code for selecting a first postal security device (PSD) resource from a plurality od PSD resources stored by the postage vendor system;
> code for decreasing a first value associated with the first PSD resource by a value of the first stamp;
> code for increasing a second value associated with the first PSD resource by the value of the first stamp; and
> code for generating the information for printing the first indicium using the first PSD resource.

45. The computer program product of claim 44 wherein the code for generating the information for printing the second indicium comprises:

> code for selecting the first server from the plurality of server systems of the postage vendor system to generate the information for printing the second indicium;
> code for selecting the first postal security device (PSD) resource for generating the information for printing the second indicium;
> code for decreasing the first value associated with the first PSD resource by a value of the second stamp;
> code for increasing the second value associated with the first PSD resource by the value of the second stamp;

and

code for generating the information for printing the second indicium using the first PSD resource.

46. The computer program product of claim 44, wherein the code for generating the information for printing the second indicium comprises:

code for selecting the first server system from the plurality of server systems of the postage vendor system to generate the information for printing the second indicium;

code for selecting a second postal security device (PSD) resource from the plurality of PSD resources stores by the postage vendor system for generating the information of printing the second indicium;

code for decreasing a first value associated with the second PSD resource by a value of the second stamp;

code for increasing a second value associated with the second PSD resource by the value of the second stamp; and

code for generating the information for printing the second indicium using the second PSD resource.

47. The computer program product of claim 39 wherein the code for generating the information for printing the second indicium comprises:

code for selecting a second server system from the plurality of server systems of the postage vendor system to generate the information for printing the second indicium; and

code for generating the information for printing the second indicium using the second server system.

48. The computer program product of claim 33 wherein:

the first user system is located at a first address, and

the second user system is located at a second address different from the first address.


**Patentansprüche**

1. Verfahren zur Ausgabe von Postwertzeichen in einer Netzwerkumgebung, die eine Vielzahl von an ein eine Vielzahl von Serversystemen umfassendes Postwertzeichenverkaufssystem (102) gekoppelten Benutzersystemen umfaßt, umfassend am Postwertzeichenverkaufssystem (102):

Empfangen einer ersten Anfrage von einem ersten Benutzersystem (104-1) aus der Vielzahl der Benutzersysteme, die den Kauf eines ersten Wertzeichens anfragt,

Empfangen einer zweiten Anfrage von einem zweiten Benutzersystem (104-2) aus der Vielzahl der Benutzersysteme, die den Kauf eines zweiten Wertzeichens anfragt,

als Reaktion auf die erste Anfrage Erzeugen einer Information zum Drucken eines ersten Freimachungsvermerks, der dem ersten Wertzeichen entspricht, auf Grundlage einer Einzellizenznummer, die von einer Postbehörde zugeteilt wurde und dem Postwertzeichenverkaufssystem (102) zugeordnet ist,

als Reaktion auf die zweite Anfrage Erzeugen einer Information zum Drucken eines zweiten Freimachungsvermerks, der dem zweiten Wertzeichen entspricht, auf Grundlage der Einzellizenznummer, die dem Postwertzeichenverkaufssystem (102) zugeordnet ist,

Übermitteln der Information zum Drucken des ersten Freimachungsvermerks zum ersten Benutzersystem (104-1) und

Übermitteln der Information zum Drucken des zweiten Freimachungsvermerks zum zweiten Benutzersystem (104-2).

2. Verfahren nach Anspruch 1, ferner umfassend das Drucken des ersten Freimachungsvermerks am ersten Benutzersystem auf Grundlage der von dem Postwertzeichenverkaufssystem empfangenen Information zum Drucken des ersten Freimachungsvermerks.

3. Verfahren nach Anspruch 2, wobei:

die erste Anfrage eine Information enthält, die ein Medium identifiziert, auf das der erste Freimachungsvermerk zu drucken ist,

das Erzeugen der Information zum Drucken des ersten Freimachungsvermerks, der dem ersten Wertzeichen entspricht, folgendes umfaßt:

Validieren der Information, die das Medium identifiziert, auf das der erste Freimachungsvermerk zu drukken ist, und
Erzeugen der Information zum Drucken des ersten Freimachungsvermerks nur dann, wenn durch das Postwertzeichenverkaufssystem ermittelt wird, daß die Information, die das Medium identifiziert, auf das der erste Freimachungsvermerk zu drucken ist, gültig ist, und wobei

das Drucken des ersten Freimachungsvermerks das Drucken des ersten Freimachungsvermerks auf das Medium umfaßt.

4. Verfahren nach Anspruch 3, wobei es sich bei dem Medium, auf das der erste Freimachungsvermerk gedruckt wird, um ein Etikett und bei der Information, die das Medium identifiziert, um eine Seriennummer, die dem Etikett zugeordnet ist, handelt.

5. Verfahren nach Anspruch 3, wobei es sich bei dem Medium, auf das der erste Freimachungsvermerk gedruckt wird, um ein Etikett von einem Etikettenbogen und bei der Information, die das Medium identifiziert, um eine Seriennummer, die dem Etikettenbogen zugeordnet ist, handelt.

6. Verfahren nach Anspruch 2, wobei:

die erste Anfrage eine Information, die einen ersten Benutzer identifiziert, und eine Kreditkarteninformation enthält und
das Erzeugen der Information zum Drucken eines ersten Freimachungsvermerks, der dem ersten Wertzeichen entspricht, folgendes umfaßt:

Validieren der information, die den ersten Benutzer identifiziert, und der Kreditkarteninformation und
Erzeugen der Information zum Drucken des ersten Freimachungsvermerks nur dann, wenn durch das Postwertzeichenverkaufssystem ermittelt wird, daß die Information, die den ersten Benutzer identifiziert, und die Kreditkarteninformation gültig sind.

7. Verfahren nach Anspruch 1, wobei das Erzeugen der Information zum Drucken des ersten Freimachungsvermerks folgendes umfaßt:

Auswählen eines ersten Serversystems aus der Vielzahl von Serversystemen des Postwertzeichenverkaufssystems, um die Information zum Drucken des ersten Freimachungsvermerks zu erzeugen, und
Erzeugen der Information zum Drucken des ersten Freimachungsvermerks unter Verwendung des ersten Serversystems.

8. Verfahren nach Anspruch 7, wobei das Auswählen des ersten Serversystems aus der Vielzahl von Serversystemen folgendes umfaßt:

Speichern einer Liste von Serversystemen, die zum Erzeugen einer Information zum Drucken des ersten Freimachungsvermerks verwendet werden können, beim Postwertzeichenverkaufssystem und
Auswählen des ersten Serversystems aus der Liste von Serversystemen gemäß einem Auswahlverfahren.

9. Verfahren nach Anspruch 8, wobei das Auswahlverfahren ein Round-Robin-Auswahlverfahren umfaßt.

10. Verfahren nach Anspruch 7, wobei das Erzeugen der Information zum Drucken des ersten Freimachungsvermerks unter Verwendung des ersten Serversystems folgendes umfaßt:

Erzeugen einer digitalen Signatur unter Verwendung eines Verschlüsselungsmoduls, das dem ersten Serversystem zugeordnet ist, und
Einbinden der digitalen Signatur in die Information zum Drucken des ersten Freimachungsvermerks.

11. Verfahren nach Anspruch 7, wobei das Erzeugen der Information zum Drucken des ersten Freimachungsvermerks unter Verwendung des ersten Serversystems folgendes umfaßt:

Auswählen einer ersten PSD-Ressource (PSD = postal security device, Postsicherheitseinrichtung) aus einer Vielzahl von PSD-Ressourcen, die durch von dem Postwertzeichenverkaufssystem gespeichert sind,

Ermitteln, ob Geldmittel, die der ersten PSD-Ressource zugeordnet sind, dem Wert des ersten Wertzeichens zumindest gleichkommen,

wenn ermittelt wird, daß die Geldmittel, die der ersten PSD-Ressource zugeordnet sind, weniger als der Wert des ersten Wertzeichens ausmachen, Hinzufügen von Geldmitteln zu den Geldmitteln, die der ersten PSD-Ressource zugeordnet sind, und

Erzeugen der Information zum Drucken des ersten Freimachungsvermerks unter Verwendung der ersten PSD-Ressource.

12. Verfahren nach Anspruch 7, wobei das Erzeugen der Information zum Drucken des ersten Freimachungsvermerks unter Verwendung des ersten Serversystems folgendes umfaßt:

Auswählen einer ersten PSD-Ressource (PSD = postal security device, Postsicherheitseinrichtung) aus einer Vielzahl von PSD-Ressourcen, die von dem Postwertzeichenverkaufssystem gespeichert sind,

Verringern eines ersten Werts, der der ersten PSD-Ressource zugeordnet ist, um einen Wert des ersten Wertzeichens,

Erhöhen eines zweiten Werts, der der ersten PSD-Ressource zugeordnet ist, um den Wert des ersten Wertzeichens, und

Erzeugen der Information zum Drucken des ersten Freimachungsvermerks unter Verwendung der ersten PSD-Ressource.

13. Verfahren nach Anspruch 12, wobei das Erzeugen der Information zum Drucken des zweiten Freimachungsvermerks folgendes umfaßt:

Auswählen des ersten Serversystems aus der Vielzahl von Serversystemen des Postwertzeichenverkaufssystems, um die Information zum Drucken des zweiten Freimachungsvermerks zu erzeugen,

Auswählen der ersten PSD-Ressource (PSD = postal security device, Postsicherheitseinrichtung) zum Erzeugen der Information zum Drucken des zweiten Freimachungsvermerks,

Verringern des ersten Werts, der der ersten PSD-Ressource zugeordnet ist, um einen Wert des zweiten Wertzeichens,

Erhöhen des zweiten Werts, der der ersten PSD-Ressource zugeordnet ist, um den Wert des zweiten Wertzeichens, und

Erzeugen der Information zum Drucken des zweiten Freimachungsvermerks unter Verwendung der ersten PSD-Ressource.

14. Verfahren nach Anspruch 12, wobei das Erzeugen der Information zum Drucken des zweiten Freimachungsvermerks folgendes umfaßt:

Auswählen des ersten Serversystems aus der Vielzahl von Serversystemen des Postwertzeichenverkaufssystems, um die Information zum Drucken des zweiten Freimachungsvermerks zu erzeugen,

Auswählen einer zweiten PSD-Ressource (PSD = postal security device, Postsicherheitseinrichtung) aus der Vielzahl von PSD-Ressourcen, die von dem Postwertzeichenverkaufssystem gespeichert sind, zum Erzeugen der Information zum Drucken des zweiten Freimachungsvermerks,

Verringern eines ersten Werts, der der zweiten PSD-Ressource zugeordnet ist, um einen Wert des zweiten Wertzeichens,

Erhöhen eines zweiten Werts, der der zweiten PSD-Ressource zugeordnet ist, um den Wert des zweiten Wertzeichens und

Erzeugen der Information zum Drucken des zweiten Freimachungsvermerks unter Verwendung der zweiten PSD-Ressource.

15. Verfahren nach Anspruch 7, wobei das Erzeugen der Information zum Drucken des zweiten Freimachungsvermerks folgendes umfaßt:

Auswählen eines zweiten Serversystems aus der Vielzahl von Serversystemen des Postwertzeichenverkaufssystems, um die Information zum Drucken des zweiten Freimachungsvermerks zu erzeugen, und

Erzeugen der Information zum Drucken des zweiten Freimachungsvermerks unter Verwendung des zweiten Serversystems.

**16.** Verfahren nach Anspruch 1, wobei:

> sich das erste Benutzersystem an einer ersten Adresse befindet und
> sich das zweite Benutzersystem an einer zweiten Adresse befindet, die sich von der ersten Adresse unterscheidet.

**17.** System zur Ausgabe von Postwertzeichen, umfassend:

> ein Netzwerk (108),
> eine Vielzahl von Datenverarbeitungssystemen, die an das Netzwerk gekoppelt sind, wobei die Vielzahl von Datenverarbeitungssystemen ein erstes Datenverarbeitungssystem (104-1) und ein zweites Datenverarbeitungssystem (104-2) beinhalten, und
> ein Postwertzeichenverkaufssystem (102), das an das Netzwerk gekoppelt ist, wobei das Postwertzeichenverkaufssystem eine Vielzahl von Serversystemen und eine Datenbank umfaßt,
>
> > wobei das Postwertzeichenverkaufssystem (102) konfiguriert ist, um:
>
> eine erste Anfrage von dem ersten Datenverarbeitungssystem (104-1), das den Kauf eines ersten Wertzeichens anfordert, zu empfangen,
> eine zweite Anfrage von einem zweiten Datenverarbeitungssystem (104-2), das den Kauf eines zweiten Wertzeichens anfordert, zu empfangen,
> als Reaktion auf die erste Anfrage eine Information zum Drucken eines ersten Freimachungsvermerks, der dem ersten Wertzeichen entspricht, auf Grundlage einer Einzellizenznummer, die von einer Postbehörde zugeteilt wurde und dem Postwertzeichenverkaufssystem zugeordnet ist, zu erzeugen,
> als Reaktion auf die zweite Anfrage eine Information zum Drucken eines zweiten Freimachungsvermerks, der dem zweiten Wertzeichen entspricht, auf Grundlage der Einzellizenznummer, die dem Postwertzeichenverkaufssystem (102) zugeordnet ist, zu erzeugen,
> die Information zum Drucken des ersten Freimachungsvermerks zum ersten Datenverarbeitungssystem (104-1) zu übermitteln und um
> die Information zum Drucken des zweiten Freimachungsvermerks zum zweiten Datenverarbeitungssystem (104-2) zu übermitteln.

**18.** System nach Anspruch 17, wobei das erste Datenverarbeitungssystem konfiguriert ist, um den ersten Freimachungsvermerk auf Grundlage der von dem Postwertzeichenverkaufssystem empfangenen Information zum Drucken des ersten Freimachungsvermerks zu drucken.

**19.** System nach Anspruch 18, wobei:

> die erste Anfrage eine Information enthält, die ein Medium identifiziert, auf das der erste Freimachungsvermerk zu drucken ist,
> das Postwertzeichenverkaufssystem konfiguriert ist, um die Information zum Drucken des ersten Freimachungsvermerks, der dem ersten Wertzeichen entspricht, zu erzeugen, indem es:
>
> > die Information, die das Medium identifiziert, auf das der erste Freimachungsvermerk zu drucken ist, validiert und
> > die Information zum Drucken des ersten Freimachungsvermerks nur dann erzeugt, wenn durch das Postwertzeichenverkaufssystem ermittelt wird, daß die Information, die das Medium identifiziert, auf das der erste Freimachungsvermerk zu drucken ist, gültig ist, und
>
> das erste Datenverarbeitungssystem konfiguriert ist, um den ersten Freimachungsvermerk auf das Medium zu drucken.

**20.** System nach Anspruch 19, wobei es sich bei dem Medium, auf das der erste Freimachungsvermerk gedruckt wird, um ein Etikett und bei der Information, die das Medium identifiziert, um eine Seriennummer, die dem Etikett zugeordnet ist, handelt.

**21.** System nach Anspruch 19, wobei es sich bei dem Medium, auf das der erste Freimachungsvermerk gedruckt wird, um ein Etikett von einem Etikettenbogen und bei der Information, die das Medium identifiziert, um eine Seriennummer, die dem Etikettenbogen zugeordnet ist, handelt.

22. System nach Anspruch 18, wobei:

die erste Anfrage eine Information, die einen ersten Benutzer identifiziert, und eine Kreditkarteninformation enthält und

das Postwertzeichenverkaufssystem konfiguriert ist, um die Information zum Drucken des ersten Freimachungsvermerks, der dem ersten Wertzeichen entspricht, zu erzeugen, indem es:

die Information, die den ersten Benutzer identifiziert, und die Kreditkarteninformation validiert und

die Information zum Drucken des ersten Freimachungsvermerks nur dann erzeugt, wenn durch das Postwertzeichenverkaufssystem ermittelt wird, daß die Information, die den ersten Benutzer identifiziert, und die Kreditkarteninformation gültig sind.

23. System nach Anspruch 17, wobei die Vielzahl von Serversystemen des Postwertzeichenverkaufssystems ein erstes Serversystem beinhalten,

wobei das erste Serversystem konfiguriert ist, um:

die erste Anfrage zu empfangen,

ein zweites Serversystem aus der Vielzahl der Serversysteme auszuwählen, um die Information zum Drucken des ersten Freimachungsvermerks zu erzeugen, und

wobei das zweite Serversystem konfiguriert ist, um die Information zum Drucken des ersten Freimachungsvermerks zu erzeugen.

24. System nach Anspruch 23, wobei die Datenbank konfiguriert ist, um eine Liste von Serversystemen zu speichern, die zum Erzeugen einer Information zum Drucken des ersten Freimachungsvermerks verwendet werden können, und das erste Serversystem konfiguriert ist, um das zweite Serversystem aus der Liste von Serversystemen durch Anwendung eines Auswahlverfahrens auszuwählen.

25. System nach Anspruch 24, wobei das Auswahlverfahren ein Round-Robin-Auswahlverfahren umfaßt.

26. System nach Anspruch 23, wobei das zweite Serversystem an ein Verschlüsselungsmodul gekoppelt ist, das konfiguriert ist, um eine digitale Signatur zu erzeugen, und das zweite Serversystem konfiguriert ist, um die digitale Signatur in die Information zum Drucken des ersten Freimachungsvermerks einzubinden.

27. System nach Anspruch 23, wobei das zweite Serversystem, um die Information zum Drucken des ersten Freimachungsvermerks zu erzeugen, konfiguriert ist, um:

eine erste PSD-Ressource (PSD = postal security device, Postsicherheitseinrichtung) aus einer Vielzahl von PSD-Ressourcen, die von dem Postwertzeichenverkaufssystem gespeichert sind, auszuwählen,

zu ermitteln, ob Geldmittel, die der ersten PSD-Ressource zugeordnet sind, dem Wert des ersten Wertzeichens zumindest gleichkommen,

Geldmittel zu den Geldmitteln, die der ersten PSD-Ressource zugeordnet sind, hinzuzufügen, wenn die Geldmittel, die der ersten PSD-Ressource zugeordnet sind, weniger als der Wert des ersten Wertzeichens ausmachen und

die Information zum Drucken des ersten Freimachungsvermerks unter Verwendung der ersten PSD-Ressource zu erzeugen.

28. System nach Anspruch 23, wobei das zweite Serversystem, um die Information zum Drucken des ersten Freimachungsvermerks zu erzeugen, konfiguriert ist, um:

eine erste PSD-Ressource (PSD = postal security device, Postsicherheitseinrichtung) aus einer Vielzahl von PSD-Ressourcen, die von dem Postwertzeichenverkaufssystem gespeichert sind, auszuwählen,

einen ersten Wert, der der ersten PSD-Ressource zugeordnet ist, um einen Wert des ersten Wertzeichens zu verringern,

einen zweiten Wert, der der ersten PSD-Ressource zugeordnet ist, um den Wert des ersten Wertzeichens zu erhöhen und

die Information zum Drucken des ersten Freimachungsvermerks unter Verwendung der ersten PSD-Ressource zu erzeugen.

**29.** System nach Anspruch 28, wobei:

das erste Serversystem konfiguriert ist, um:

die zweite Anfrage zu empfangen,
das zweite Serversystem aus der Vielzahl der Serversysteme auszuwählen, um die Information zum Drucken des zweiten Freimachungsvermerks zu erzeugen, und

das zweite Serversystem konfiguriert ist, um:

die erste PSD-Ressource (PSD = postal security device, Postsicherheitseinrichtung) zum Erzeugen der Information zum Drucken des zweiten Freimachungsvermerks auszuwählen,
den ersten Wert, der der ersten PSD-Ressource zugeordnet ist, um einen Wert des zweiten Wertzeichens zu verringern,
den zweiten Wert, der der ersten PSD-Ressource zugeordnet ist, um den Wert des zweiten Wertzeichens zu erhöhen und
die Information zum Drucken des zweiten Freimachungsvermerks unter Verwendung der ersten PSD-Ressource zu erzeugen.

**30.** System nach Anspruch 28, wobei:

das erste Serversystem konfiguriert ist, um:

die zweite Anfrage zu empfangen und
das zweite Serversystem aus der Vielzahl der Serversysteme auszuwählen, um die Information zum Drucken des zweiten Freimachungsvermerks zu erzeugen, und

das zweite Serversystem konfiguriert ist, um:

eine zweite PSD-Ressource (PSD = postal security device, Postsicherheitseinrichtung) aus der Vielzahl der PSD-Ressourcen, die von dem Postwertzeichenverkaufssystem gespeichert sind, zum Erzeugen der Information zum Drucken des zweiten Freimachungsvermerks auszuwählen,
einen ersten Wert, der der zweiten PSD-Ressource zugeordnet ist, um einen Wert des zweiten Wertzeichens zu verringern,
einen zweiten Wert, der der zweiten PSD-Ressource zugeordnet ist, um den Wert des zweiten Wertzeichens zu erhöhen, und
die Information zum Drucken des zweiten Freimachungsvermerks unter Verwendung der zweiten PSD-Ressource zu erzeugen.

**31.** System nach Anspruch 23, wobei:

das erste Serversystem konfiguriert ist, um:

die zweite Anfrage zu empfangen,
ein drittes Serversystem aus der Vielzahl der Serversysteme auszuwählen, um die Information zum Drucken des zweiten Freimachungsvermerks zu erzeugen, und

wobei das dritte Serversystem konfiguriert ist, die Information zum Drucken des zweiten Freimachungsvermerks zu erzeugen.

**32.** System nach Anspruch 17, wobei:

sich das erste Datenverarbeitungssystem an einer ersten Adresse befindet und über das Netzwerk an das Postwertzeichenverkaufssystem gekoppelt ist und
sich das zweite Datenverarbeitungssystem an einer zweiten Adresse, die sich von der ersten Adresse unterscheidet, befindet und über das Netzwerk an das Postwertzeichenverkaufssystem gekoppelt ist.

33. Computerprogrammprodukt, das auf einem computerlesbaren Medium gespeichert und durch ein Datenverarbeitungssystem ausführbar ist, zur Ausgabe von Postwertzeichen in einer Netzwerkumgebung (108), die eine Vielzahl von Benutzersystemen umfasst, die an ein Postwertzeichenverkaufssystem (102) gekoppelt sind, wobei das Postwertzeichenverkaufssystem (102) eine Vielzahl von Serversystemen umfasst, wobei das Computerprogrammprodukt umfasst:

Code zum Empfangen einer ersten Anfrage von einem ersten Benutzersystem (104-1) aus der Vielzahl der Benutzersysteme, das den Kauf eines ersten Wertzeichens anfordert,
Code zum Empfangen einer zweiten Anfrage von einem zweiten Benutzersystem (104-2) aus der Vielzahl der Benutzersysteme, das den Kauf eines zweiten Wertzeichens anfordert,
Code zum Erzeugen einer Information zum Drucken eines ersten Freimachungsvermerks, der dem ersten Wertzeichen entspricht, als Reaktion auf die erste Anfrage auf Grundlage einer Einzellizenznummer, die von einer Postbehörde zugeteilt wurde und dem Postwertzeichenverkaufssystem (102) zugeordnet ist,
Code zum Erzeugen einer Information zum Drucken eines zweiten Freimachungsvermerks, der dem zweiten Wertzeichen entspricht, als Reaktion auf die zweite Anfrage auf Grundlage der Einzellizenznummer, die dem Postwertzeichenverkaufssystem (102) zugeordnet ist,
Code zum Übermitteln der information zum Drucken des ersten Freimachungsvermerks zum ersten Benutzersystem (104-1) und
Code zum Übermitteln der Information zum Drucken des zweiten Freimachungsvermerks zum zweiten Benutzersystem (104-2).

34. Computerprogrammprodukt nach Anspruch 33, das ferner umfassend Code zum Drucken des ersten Freimachungsvermerks am ersten Benutzersystem auf Grundlage der von dem Postwertzeichenverkaufssystem empfangenen Information zum Drucken des ersten Freimachungsvermerks.

35. Computerprogrammprodukt nach Anspruch 34, wobei:

die erste Anfrage eine Information enthält, die ein Medium identifiziert, auf das der erste Freimachungsvermerk zu drucken ist,
der Code zum Erzeugen der Information zum Drucken des ersten Freimachungsvermerks, der dem ersten Wertzeichen entspricht, umfasst:

Code zum Validieren der Information, die das Medium identifiziert, auf das der erste Freimachungsvermerk zu drucken ist, und
Code zum Erzeugen der Information zum Drucken des ersten Freimachungsvermerks nur dann, wenn durch das Postwertzeichenverkaufssystem ermittelt wird, dass die Information, die das Medium identifiziert, auf das der erste Freimachungsvermerk zu drucken ist, gültig ist, und

der Code zum Drucken des ersten Freimachungsvermerks Code zum Drucken des ersten Freimachungsvermerks auf das Medium umfasst.

36. Computerprogrammprodukt nach Anspruch 35, wobei es sich bei dem Medium, auf das der erste Freimachungsvermerk gedruckt wird, um ein Etikett und bei der Information, die das Medium identifiziert, um eine Seriennummer, die dem Etikett zugeordnet ist, handelt.

37. Computerprogrammprodukt nach Anspruch 35, wobei es sich bei dem Medium, auf das der erste Freimachungsvermerk gedruckt wird, um ein Etikett von einem Etikettenbogen und bei der Information, die das Medium identifiziert, um eine Seriennummer, die dem Etikettenbogen zugeordnet ist, handelt.

38. Computerprogrammprodukt nach Anspruch 34, wobei:

die erste Anfrage eine Information, die einen ersten Benutzer identifiziert, und eine Kreditkarteninformation enthält, und
der Code zum Erzeugen der Information zum Drucken eines ersten Freimachungsvermerks, der dem ersten Wertzeichen entspricht, umfasst:

Code zum Validieren der Information, die den ersten Benutzer identifiziert, und der Kreditkarteninformation und

Code zum Erzeugen der Information zum Drucken des ersten Freimachungsvermerks nur dann, wenn durch das Postwertzeichenverkaufssystem ermittelt wird, dass die Information, die den ersten Benutzer identifiziert, und die Kreditkarteninformation gültig sind.

**39.** Computerprogrammprodukt nach Anspruch 33, wobei der Code zum Erzeugen der Information zum Drucken des ersten Freimachungsvermerks umfasst:

Code zum Auswählen eines ersten Serversystems aus der Vielzahl der Serversysteme des Postwertzeichenverkaufssystems, um die Information zum Drucken des ersten Freimachungsvermerks zu erzeugen, und Code zum Erzeugen der Information zum Drucken des ersten Freimachungsvermerks unter Verwendung des ersten Serversystems.

**40.** Computerprogrammprodukt nach Anspruch 39, wobei der Code zum Auswählen des ersten Serversystems aus der Vielzahl der Serversysteme umfasst:

Code zum Auswählen des ersten Serversystems aus einer Liste von Serversystemen, die zum Erzeugen einer Information zum Drucken des ersten Freimachungsvermerks verwendet werden können, gemäß einem Auswahlverfahren.

**41.** Computerprogrammprodukt nach Anspruch 40, wobei das Auswahlverfahren ein Round-Robin-Auswahlverfahren umfasst.

**42.** Computerprogrammprodukt nach Anspruch 39, wobei der Code zum Erzeugen der Information zum Drucken des ersten Freimachungsvermerks unter Verwendung des ersten Serversystems umfasst:

Code zum Erzeugen einer digitalen Signatur unter Verwendung eines Verschlüsselungsmoduls, das dem ersten Serversystem zugeordnet ist, und Code zum Einbinden der digitalen Signatur in die Information zum Drucken des ersten Freimachungsvermerks.

**43.** Computerprogrammprodukt nach Anspruch 39, wobei der Code zum Erzeugen der Information zum Drucken des ersten Freimachungsvermerks unter Verwendung des ersten Serversystems umfasst:

Code zum Auswählen einer ersten PSD-Ressource (PSD = postal security device, Postsicherheitseinrichtung) aus einer Vielzahl von PSD-Ressourcen, die durch das Postwertzeichenverkaufssystem gespeichert sind, Code zum Ermitteln, ob Geldmittel, die der ersten PSD-Ressource zugeordnet sind, dem Wert des ersten Wertzeichens zumindest gleichkommen, wenn ermittelt wird, dass die Geldmittel, die der ersten PSD-Ressource zugeordnet sind, weniger als der Wert des ersten Wertzeichens ausmachen, Code zum Hinzufügen von Geldmitteln zu den Geldmitteln, die der ersten PSD-Ressource zugeordnet sind, und Code zum Erzeugen der Information zum Drucken des ersten Freimachungsvermerks unter Verwendung der ersten PSD-Ressource.

**44.** Computerprogrammprodukt nach Anspruch 39, wobei der Code zum Erzeugen der Information zum Drucken des ersten Freimachungsvermerks unter Verwendung des ersten Serversystems umfasst:

Code zum Auswählen einer ersten PSD-Ressource (PSD = postal security device, Postsicherheitseinrichtung) aus einer Vielzahl von PSD-Ressourcen, die von dem Postwertzeichenverkaufssystem gespeichert sind, Code zum Verringern eines ersten Werts, der der ersten PSD-Ressource zugeordnet ist, um einen Wert des ersten Wertzeichens, Code zum Erhöhen eines zweiten Werts, der der ersten PSD-Ressource zugeordnet ist, um den Wert des ersten Wertzeichens und Code zum Erzeugen der Information zum Drucken des ersten Freimachungsvermerks unter Verwendung der ersten PSD-Ressource.

**45.** Computerprogrammprodukt nach Anspruch 44, wobei der Code zum Erzeugen der Information zum Drucken des zweiten Freimachungsvermerks umfasst:

Code zum Auswählen des ersten Serversystems aus der Vielzahl der Serversysteme des Postwertzeichenverkaufssystems, um die Information zum Drucken des zweiten Freimachungsvermerks zu erzeugen,
Code zum Auswählen der ersten PSD-Ressource (PSD = postal security device, Postsicherheitseinrichtung) zum Erzeugen der Information zum Drucken des zweiten Freimachungsvermerks,
Code zum Verringern des ersten Werts, der der ersten PSD-Ressource zugeordnet ist, um einen Wert des zweiten Wertzeichens,
Code zum Erhöhen des zweiten Werts, der der ersten PSD-Ressource zugeordnet ist, um den Wert des zweiten Wertzeichens und
Code zum Erzeugen der Information zum Drucken des zweiten Freimachungsvermerks unter Verwendung der ersten PSD-Ressource.

**46.** Computerprogrammprodukt nach Anspruch 44, wobei der Code zum Erzeugen der Information zum Drucken des zweiten Freimachungsvermerks umfasst:

Code zum Auswählen des ersten Serversystems aus der Vielzahl der Serversysteme des Postwertzeichenverkaufssystems, um die Information zum Drucken des zweiten Freimachungsvermerks zu erzeugen,
Code zum Auswählen einer zweiten PSD-Ressource (PSD = postal security device, Postsicherheitseinrichtung) aus der Vielzahl der PSD-Ressourcen, die von dem Postwertzeichenverkaufssystem gespeichert sind, zum Erzeugen der Information zum Drucken des zweiten Freimachungsvermerks,
Code zum Verringern eines ersten Werts, der der zweiten PSD-Ressource zugeordnet ist, um einen Wert des zweiten Wertzeichens,
Code zum Erhöhen eines zweiten Werts, der der zweiten PSD-Ressource zugeordnet ist, um den Wert des zweiten Wertzeichens und
Code zum Erzeugen der Information zum Drucken des zweiten Freimachungsvermerks unter Verwendung der zweiten PSD-Ressource.

**47.** Computerprogrammprodukt nach Anspruch 39, wobei der Code zum Erzeugen der Information zum Drucken des zweiten Freimachungsvermerks umfasst:

Code zum Auswählen eines zweiten Serversystems aus der Vielzahl der Serversysteme des Postwertzeichenverkaufssystems, um die Information zum Drucken des zweiten Freimachungsvermerks zu erzeugen, und
Code zum Erzeugen der Information zum Drucken des zweiten Freimachungsvermerks unter Verwendung des zweiten Serversystems.

**48.** Computerprogrammprodukt nach Anspruch 33, wobei:

sich das erste Benutzersystem an einer ersten Adresse befindet und
sich das zweite Benutzersystem an einer zweiten Adresse, die sich von der ersten Adresse unterscheidet, befindet.

**Revendications**

**1.** Dans un environnement de réseau comprenant une multiplicité de systèmes d'utilisateurs couplés à un système de vendeur d'affranchissement (102) comprenant une multiplicité de systèmes serveurs, un procédé de distribution d'affranchissement comprenant, au système de vendeur d'affranchissement (102) :

la réception d'une première demande provenant d'un premier système d'utilisateur (104-1) parmi la multiplicité de systèmes d'utilisateurs, demandant l'achat d'un premier timbre;
la réception d'une seconde demande provenant d'un second système d'utilisateur (104-2) parmi la multiplicité de systèmes d'utilisateurs, demandant l'achat d'un second timbre;
en réponse à la première demande, la génération d'information pour imprimer une première marque correspondant au premier timbre, sur la base d'un numéro de licence unique assigné par une autorité postale et associé au système de vendeur d'affranchissement (102);
en réponse à la seconde demande, la génération d'information pour imprimer une seconde marque correspondant au second timbre, sur la base du numéro de licence unique associé au système de vendeur d'affranchissement (102);
la communication au premier système d'utilisateur (104-1) de l'information pour imprimer la première marque;

et

la communication au second système d'utilisateur (104-2) de l'information pour imprimer la seconde marque.

**2.** Le procédé de la revendication 1, comprenant en outre l'impression de la première marque au premier système d'utilisateur sur la base de l'information pour imprimer la première marque, reçue du système de vendeur d'affranchissement.

**3.** Le procédé de la revendication 2, dans lequel :

la première demande comprend une information identifiant un support sur lequel la première marque doit être imprimée;
la génération de l'information pour imprimer la première marque correspondant au premier timbre comprend :

la validation de l'information identifiant le support sur lequel la première marque doit être imprimée; et
la génération de l'information pour imprimer la première marque seulement si le système de vendeur d'affranchissement détermine que l'information identifiant le support sur lequel la première marque doit être imprimée est valide; et
l'impression de la première marque comprend l'impression de la première marque sur le support.

**4.** Le procédé selon la revendication 3, dans lequel le support sur lequel la première marque est imprimée est une étiquette et l'information identifiant le support est un numéro de série associé à l'étiquette.

**5.** Le procédé de la revendication 3, dans lequel le support sur lequel la première marque est imprimée est une étiquette provenant d'une planche d'étiquettes et l'information identifiant le support est un numéro de série associé à la planche d'étiquettes.

**6.** Le procédé de la revendication 2, dans lequel :

la première demande comprend une information identifiant un premier utilisateur et une information de carte de crédit; et
la génération de l'information pour imprimer une première marque correspondant au premier timbre comprend :

la validation de l'information identifiant le premier utilisateur et de l'information de carte de crédit; et
la génération de l'information pour imprimer la première marque seulement si le système de vendeur d'affranchissement détermine que l'information identifiant le premier utilisateur et l'information de carte de crédit sont valides.

**7.** Le procédé de la revendication 1, dans lequel la génération de l'information pour imprimer la première marque comprend :

la sélection d'un premier système serveur parmi la multiplicité de systèmes serveurs du système de vendeur d'affranchissement, pour générer l'information pour imprimer la première marque; et
la génération de l'information pour imprimer la première marque en utilisant le premier système serveur.

**8.** Le procédé de la revendication 7, dans lequel la sélection du premier système serveur parmi la multiplicité de systèmes serveurs comprend :

le stockage, au système de vendeur d'affranchissement, d'une liste de systèmes serveurs qui peuvent être utilisés pour générer l'information pour imprimer la première marque; et
la sélection du premier système serveur dans la liste de systèmes serveurs, conformément à une procédure de sélection.

**9.** Le procédé de la revendication 8, dans lequel la procédure de sélection comprend une procédure de sélection à tour de rôle.

**10.** Le procédé de la revendication 7, dans lequel la génération de l'information pour imprimer la première marque en utilisant le premier système serveur comprend :

la génération d'une signature numérique en utilisant un module cryptographique associé au premier système serveur; et

l'inclusion de la signature numérique dans l'information pour imprimer la première marque.

**11.** Le procédé de la revendication 7, dans lequel la génération de l'information pour imprimer la première marque en utilisant le premier système serveur comprend :

la sélection d'une première ressource de dispositif de sécurité postal (PSD) parmi une multiplicité de ressources de PSD stockées par le système de vendeur d'affranchissement;

une opération pour déterminer si des fonds associés à la première ressource de PSD sont au moins égaux à la valeur du premier timbre;

s'il est déterminé que les fonds associés à la première ressource de PSD sont inférieurs à la valeur du premier timbre, l'ajout de fonds aux fonds associés à la première ressource de PSD; et

la génération de l'information pour imprimer la première marque en utilisant la première ressource de PSD.

**12.** Le procédé de la revendication 7, dans lequel la génération de l'information pour imprimer la première marque en utilisant le premier système serveur comprend :

la sélection d'une première ressource de dispositif de sécurité postal (PSD) parmi une multiplicité de ressources de PSD stockées par le système de vendeur d'affranchissement;

la diminution d'une première valeur associée à la première ressource de PSD, d'une valeur du premier timbre;

l'augmentation d'une seconde valeur associée à la première ressource. de PSD, de la valeur du premier timbre; et

la génération de l'information pour imprimer la première marque en utilisant la première ressource de PSD.

**13.** Le procédé de la revendication 12, dans lequel la génération de l'information pour imprimer la seconde marque comprend :

la sélection du premier système serveur parmi la multiplicité de systèmes serveurs du système de vendeur d'affranchissement, pour générer l'information pour imprimer la seconde marque;

la sélection de la première ressource de dispositif de sécurité postal (PSD) pour générer l'information pour imprimer la seconde marque;

la diminution de la première valeur associée à la première ressource de PSD, d'une valeur du second timbre;

l'augmentation de la seconde valeur associée à la première ressource de PSD, de la valeur du second timbre; et

la génération de l'information pour imprimer la seconde marque en utilisant la première ressource de PSD.

**14.** Le procédé de la revendication 12, dans lequel la génération de l'information pour imprimer la seconde marque comprend :

la sélection du premier système serveur parmi la multiplicité de systèmes serveurs du système de vendeur d'affranchissement pour générer l'information pour imprimer la seconde marque;

la sélection d'une seconde ressource de dispositif de sécurité postal (PSD) parmi la multiplicité de ressources de PSD stockées par le système de vendeur d'affranchissement, pour générer l'information pour imprimer la seconde marque;

la diminution d'une première valeur associée à la seconde ressource de:PSD, d'une valeur du second timbre;

l'augmentation d'une seconde valeur associée à la seconde ressource de PSD, de la valeur du second timbre; et

la génération de l'information pour imprimer la seconde marque en utilisant la seconde ressource de PSD.

**15.** Le procédé de la revendication 7, dans lequel la génération de l'information pour imprimer la seconde marque comprend :

la sélection d'un second système serveur parmi la multiplicité de systèmes serveurs du système de vendeur d'affranchissement, pour générer l'information pour imprimer la seconde marque; et

la génération de l'information pour imprimer la seconde marque en utilisant le second système serveur.

**16.** Le procédé de la revendication 1 dans lequel :

le premier système d'utilisateur est placé à une première adresse, et

le second système d'utilisateur est placé à une seconde adresse différente de la première adresse.

**17.** Un système pour distribuer de l'affranchissement comprenant :

un réseau de communication (108);

une multiplicité de systèmes de traitement de données couplés au réseau de communication, la multiplicité de systèmes de traitement de données incluant un premier système de traitement de données (104-1) et un second système de traitement de données (104-2); et

un système de vendeur d'affranchissement (102) couplé au réseau de communication, le système de vendeur d'affranchissement comprenant une multiplicité de systèmes serveurs et une base de données,

dans lequel le système de vendeur d'affranchissement (102) est configuré pour :

recevoir une première demande provenant du premier système de traitement de données (104-1), demandant l'achat d'un premier timbre;

recevoir une seconde demande provenant d'un second système de traitement de données (104-2), demandant l'achat d'un second timbre;

en réponse à la première demande, générer une information pour imprimer une première marque correspondant au premier timbre, sur la base d'un numéro de licence unique assigné par une autorité postale et associé au système de vendeur d'affranchissement;

en réponse à la seconde demande, générer une information pour imprimer une seconde marque correspondant au second timbre, sur la base du numéro de licence unique associé au système de vendeur d'affranchissement (102);

transmettre au premier système de traitement de données (104-1) l'information pour imprimer la première marque; et

transmettre au second système de traitement de données (104-2) l'information pour imprimer la seconde marque.

**18.** Le système de la revendication 17, dans lequel le premier système de traitement de données est configuré pour imprimer la première marque sur la base de l'information pour imprimer la première marque, reçue du système de vendeur d'affranchissement.

**19.** Le système de la revendication 18, dans lequel :

la première demande contient une information identifiant un support sur lequel la première marque doit être imprimée;

le système de vendeur d'affranchissement est configuré pour générer l'information pour imprimer la première marque correspondant au premier timbre en :

validant l'information identifiant le support sur lequel la première marque doit être imprimée; et

générant l'information pour imprimer la première marque seulement si le système de vendeur d'affranchissement détermine que l'information identifiant le support sur lequel la première marque doit être imprimée est valide; et

le premier système de traitement de données est configuré pour imprimer la première marque sur le support.

**20.** Le système de la revendication 19, dans lequel le support sur lequel la première marque est imprimée est une étiquette et l'information identifiant le support est un numéro de série associé à l'étiquette.

**21.** Le système de la revendication 19, dans lequel le support sur lequel la première marque est imprimée est une étiquette provenant d'une planche d'étiquettes, et l'information identifiant le support est un numéro de série associé à la planche d'étiquettes.

**22.** Le système de la revendication 18, dans lequel :

la première demande contient une information identifiant un premier utilisateur et une information de carte de crédit; et

EP 1 252 609 B1

le système de vendeur d'affranchissement est configuré pour générer l'information pour imprimer la première marque correspondant au premier timbre en :

validant l'information identifiant le premier utilisateur et l'information de carte de crédit; et

générant l'information pour imprimer la première marque seulement si le système de vendeur d'affranchissement détermine que l'information identifiant le premier utilisateur et l'information de carte de crédit sont valides.

23. Le système de la revendication 17, dans lequel la multiplicité de systèmes serveurs du système de vendeur d'affranchissement comprend un premier système serveur,

dans lequel le premier système serveur est configuré pour :

recevoir la première demande;

sélectionner un second système serveur parmi la multiplicité de systèmes serveurs pour générer l'information pour imprimer la première marque; et

dans lequel le second système serveur est configuré pour générer l'information pour imprimer la première marque.

24. Le système de la revendication 23, dans lequel la base de données est configurée pour stocker une liste de systèmes serveurs qui peuvent être utilisés pour générer de l'information pour imprimer la première marque, et le premier système serveur est configuré pour sélectionner le second système serveur à partir de la liste de systèmes serveurs en appliquant une procédure de sélection.

25. Le système de la revendication 24, dans lequel la procédure de sélection comprend une procédure de sélection à tour de rôle.

26. Le système de la revendication 23, dans lequel le second système serveur est couplé à un module cryptographique configuré pour générer une signature numérique, et le second système serveur est configuré pour inclure la signature numérique dans l'information pour imprimer la première marque.

27. Le système de la revendication 23, dans lequel dans le but de générer l'information pour imprimer la première marque, le second système serveur est configuré pour :

sélectionner une première ressource de dispositif de sécurité postal (PSD) parmi une multiplicité de ressources de PSD stockées par le système de vendeur d'affranchissement;

déterminer si des fonds associés à la première ressource de PSD sont au moins égaux à la valeur du premier timbre;

ajouter des fonds aux fonds associés à la première ressource de PSD si les fonds associés à la première ressource de PSD sont inférieurs à la valeur du premier timbre, et

générer l'information pour imprimer la première marque en utilisant la première ressource de PSD.

28. Le système de la revendication 23, dans lequel dans le but de générer l'information pour imprimer la première marque, le second système serveur est configuré pour :

sélectionner une première ressource de dispositif de sécurité postal (PSD) parmi une multiplicité de ressources de PSD stockées par le système de vendeur d'affranchissement;

diminuer une première valeur associée à la première ressource de PSD, d'une valeur du premier timbre;

augmenter une seconde valeur associée à la première ressource de PSD, de la valeur du premier timbre; et

générer l'information pour imprimer la première marque en utilisant la première ressource de PSD.

29. Le système de la revendication 28, dans lequel :

le premier système serveur est configuré pour :

recevoir la seconde demande;

sélectionner le second système serveur parmi la multiplicité de systèmes serveurs pour générer l'information pour imprimer la seconde marque; et

le second système serveur est configuré pour:

sélectionner la première ressource de dispositif de sécurité postal (PSD) pour générer l'information pour imprimer la seconde marque;
diminuer la première valeur associée à la première ressource de PSD, d'une valeur du second timbre;
augmenter la seconde valeur associée à la première ressource de PSD, de la valeur du second timbre; et
générer l'information pour imprimer la seconde marque en utilisant la première ressource de PSD.

30. Le système de la revendication 28, dans lequel :

le premier système serveur est configuré pour :

recevoir la seconde demande; et
sélectionner le second système serveur parmi la multiplicité de systèmes serveurs pour générer l'information pour imprimer la seconde marque; et

le second système serveur est configuré pour :

sélectionner une seconde ressource de dispositif de sécurité postal (PSD) parmi la multiplicité de ressources de PSD stockées par le système de vendeur d'affranchissement, pour générer l'information pour imprimer la seconde marque;
diminuer une première valeur associée à la seconde ressource de PSD, d'une valeur du second timbre;
augmenter une seconde valeur associée à la seconde ressource de PSD, de la valeur du second timbre; et
générer l'information pour imprimer la seconde marque en utilisant la seconde ressource de PSD.

31. Le système de la revendication 23 dans lequel :

le premier système serveur est configuré pour :

recevoir la seconde demande;
sélectionner un troisième système serveur parmi la multiplicité de systèmes serveurs pour générer l'information pour imprimer la seconde marque; et

dans lequel le troisième système serveur est configuré pour générer l'information pour imprimer la seconde marque.

32. Le système de la revendication 17 dans lequel :

le premier système de traitement de données est placé à une première adresse et est couplé au système de vendeur d'affranchissement par l'intermédiaire du réseau de communication; et
le second système de traitement de données est placé à une seconde adresse différente de la première adresse et est couplé au système de vendeur d'affranchissement par l'intermédiaire du réseau de communication.

33. Un progiciel d'ordinateur stocké sur un support lisible par ordinateur et exécutable par un système de traitement de données, pour distribuer de l'affranchissement dans un environnement de réseau (108) comprenant une multiplicité de systèmes d'utilisateurs couplés à un système de vendeur d'affranchissement (102), le système de vendeur d'affranchissement (102) comprenant une multiplicité de systèmes serveurs, le progiciel d'ordinateur comprenant :

un code pour recevoir une première demande provenant d'un premier système d'utilisateur (104-1) parmi la multiplicité de systèmes d'utilisateurs, demandant l'achat d'un premier timbre;
un code pour recevoir une seconde demande provenant d'un second système d'utilisateur (104-2) parmi la multiplicité de systèmes d'utilisateurs, demandant l'achat d'un second timbre;
en réponse à la première demande, un code pour générer une information pour imprimer une première marque correspondant au premier timbre, sur la base d'un numéro de licence unique assigné par une autorité postale et associé au système de vendeur d'affranchissement (102);
en réponse à la seconde demande, un code pour générer une information pour imprimer une seconde marque correspondant au second timbre, sur la base du numéro de licence unique associé au système de vendeur d'affranchissement (102);
un code pour communiquer au premier système d'utilisateur (104-1) l'information pour imprimer la première marque provenant du système de vendeur d'affranchissement; et
un code pour communiquer au second système d'utilisateur (104-2) l'information pour imprimer la seconde marque provenant du système de vendeur d'affranchissement.

**34.** Le progiciel d'ordinateur de la revendication 33, comprenant en outre un code pour imprimer la première marque au premier système d'utilisateur sur la base de l'information pour imprimer la première marque reçue du système de vendeur d'affranchissement.

**35.** Le progiciel d'ordinateur de la revendication 34, dans lequel:

la première demande comprend une information identifiant un support sur lequel la première marque doit être imprimée;
le code pour générer l'information pour imprimer la première marque correspondant au premier timbre comprend :

un code pour valider l'information identifiant le support sur lequel la première marque doit être imprimée; et
un code pour générer l'information pour imprimer la première marque seulement si le système de vendeur d'affranchissement détermine que l'information identifiant le support sur lequel la première marque doit être imprimée est valide; et

le code pour imprimer la première marque comprend un code pour imprimer la première marque sur le support.

**36.** Le progiciel d'ordinateur de la revendication 35, dans lequel le support sur lequel la première marque est imprimée est une étiquette et l'information identifiant le support est un numéro de série associé à l'étiquette.

**37.** Le progiciel d'ordinateur de la revendication 35, dans lequel le support sur lequel la première marque est imprimée est une étiquette provenant d'une planche d'étiquettes et l'information identifiant le support est un numéro de série associé à la planche d'étiquettes.

**38.** Le progiciel d'ordinateur de la revendication 34, dans lequel:

la première demande comprend une information identifiant un premier utilisateur et une information de carte de crédit; et
le code pour générer l'information pour imprimer une première marque correspondant au premier timbre comprend :

un code pour valider l'information identifiant le premier utilisateur et l'information de carte de crédit; et
un code pour générer l'information pour imprimer la première marque seulement si le système de vendeur d'affranchissement détermine que l'information identifiant le premier utilisateur et l'information de carte de crédit sont valides.

**39.** Le progiciel d'ordinateur de la revendication 33, dans lequel le code pour générer l'information pour imprimer la première marque comprend :

un code pour sélectionner un premier système serveur parmi la multiplicité de systèmes serveurs du système de vendeur d'affranchissement, pour générer l'information pour imprimer la première marque; et
un code pour générer l'information pour imprimer la première marque en utilisant le premier système serveur.

**40.** Le progiciel d'ordinateur de la revendication 39, dans lequel le code pour sélectionner le premier système serveur parmi la multiplicité de systèmes serveurs comprend :

un code pour sélectionner le premier système serveur à partir d'une liste de systèmes serveurs qui peuvent être utilisés pour générer l'information pour imprimer la première marque, conformément à une procédure de sélection.

**41.** Le progiciel d'ordinateur de la revendication 40, dans lequel la procédure de sélection comprend une procédure de sélection à tour de rôle.

**42.** Le progiciel d'ordinateur de la revendication 39, dans lequel le code pour générer l'information pour imprimer la première marque en utilisant le premier système serveur comprend :

un code pour générer une signature numérique en utilisant un module cryptographique associé au premier système serveur; et
un code pour inclure la signature numérique dans l'information pour imprimer la première marque.

**43.** Le progiciel d'ordinateur de la revendication 39, dans lequel le code pour générer l'information pour imprimer la première marque en utilisant le premier système serveur comprend :

un code pour sélectionner une première ressource de dispositif de sécurité postal (PSD) parmi une multiplicité de ressources de PSD stockées par le système de vendeur d'affranchissement;
un code pour déterminer si des fonds associés à la première ressource de PSD sont au moins égaux à la valeur du premier timbre;
s'il est déterminé que les fonds associés à la première ressource de PSD sont inférieurs à la valeur du premier timbre, un code pour ajouter des fonds aux fonds associés à la première ressource de PSD; et
un code pour générer l'information pour imprimer la première marque en utilisant la première ressource de PSD.

**44.** Le progiciel d'ordinateur de la revendication 39, dans lequel le code pour générer l'information pour imprimer la première marque en utilisant le premier système serveur comprend :

un code pour sélectionner une première ressource de dispositif de sécurité postal (PSD) parmi une multiplicité de ressources de PSD stockées par le système de vendeur d'affranchissement;
un code pour diminuer une première valeur associée à la première ressource de PSD, d'une valeur du premier timbre;
un code pour augmenter une seconde valeur associée à la première ressource de PSD, de la valeur du premier timbre; et
un code pour générer l'information pour imprimer la première marque en utilisant la première ressource de PSD.

**45.** Le progiciel d'ordinateur de la revendication 44, dans lequel le code pour générer l'information pour imprimer la seconde marque comprend :

un code pour sélectionner le premier système serveur parmi la multiplicité de systèmes serveurs du système de vendeur d'affranchissement, pour générer l'information pour imprimer la seconde marque;
un code pour sélectionner la première ressource de dispositif de sécurité postal (PSD) pour générer l'information pour imprimer la seconde marque;
un code pour diminuer la première valeur associée à la première ressource de PSD, d'une valeur du second timbre;
un code pour augmenter la seconde valeur associée à la première ressource de PSD, de la valeur du second timbre; et
un code pour générer l'information pour imprimer la seconde marque en utilisant la première ressource de PSD.

**46.** Le progiciel d'ordinateur de la revendication 44, dans lequel le code pour générer l'information pour imprimer la seconde marque comprend :

un code pour sélectionner le premier système serveur parmi la multiplicité de systèmes serveurs du système de vendeur d'affranchissement, pour générer l'information pour imprimer la seconde marque;
un code pour sélectionner une seconde ressource de dispositif de sécurité postal (PSD) parmi la multiplicité de ressources de PSD stockées par le système de vendeur d'affranchissement, pour générer l'information pour imprimer la seconde marque;
un code pour diminuer une première valeur associée à la seconde ressource de PSD, d'une valeur du second timbre;
un code pour augmenter une seconde valeur associée à la seconde ressource de PSD, de la valeur du second

EP 1 252 609 B1

timbre; et
un code pour générer l'information pour imprimer la seconde marque en utilisant la seconde ressource de PSD.

**47.** Le progiciel d'ordinateur de la revendication 39, dans lequel le code pour générer l'information pour imprimer la seconde marque comprend :

un code pour sélectionner un second système serveur parmi la multiplicité de systèmes serveurs du système de vendeur d'affranchissement, pour générer l'information pour imprimer la seconde marque; et
un code pour générer l'information pour imprimer la seconde marque en utilisant le second système serveur.

**48.** Le progiciel d'ordinateur de la revendication 33 dans lequel:

le premier système d'utilisateur est placé à une première adresse, et
le second système d'utilisateur est placé à une seconde adresse différente de la première adresse.

41

FIG. 1

**FIG. 2**

43

User System 104 | PVS 102

302 — User accesses a web page provided by PVS

304 — User configures request to buy postage from PVS

306 — User request communicated to PVS

308 — PVS receives request to buy postage from user system

310 — PVS validates user request

312 — Validation Successful?

314 — Message to user indicating unsuccessful validation ← No

Yes → 316 — Generate info for printing indicium as per user request

318 — Communicate info for printing indicium to user system

320 — Receive info for printing indicium from PVS

324 — Print indicium

300

FIG. 3

FIG. 4

FIG. 6

FIG. 5

FIG. 7

```
                                                          ┌─ 802
              ┌──────────────────────────────────────────┐
              │    User accesses web page provided by PVS │
              └──────────────────────────────────────────┘
                                   │
                                   ▼                      ┌─ 804
              ┌──────────────────────────────────────────┐
              │     Web server receives request to purchase │
              │                  postage                  │
              └──────────────────────────────────────────┘
                                   │
                                   ▼                      ┌─ 806
              ┌──────────────────────────────────────────┐
              │    Web server validates the purchase request │
              └──────────────────────────────────────────┘
                                   │
    810 ─┐                         ▼         ┌─ 808
  ┌──────────────────┐          ◇◇◇◇◇◇◇◇◇◇
  │   Message to user │   No    ◇ Validation ◇
  │ indicating unsuccessful │◀──◇ Successful? ◇
  │    validation     │        ◇◇◇◇◇◇◇◇◇◇
  └──────────────────┘              │
                                   │ Yes                  ┌─ 814
              ┌──────────────────────────────────────────┐
              │  Web server allocates tasks for generating the │
              │ information for printing indicia to one or more │
              │               PSDM servers               │
              └──────────────────────────────────────────┘
                                   │
                                   ▼                      ┌─ 816
              ┌──────────────────────────────────────────┐
              │  PSDM server selects a MPSD resource for  │
              │ generating the info for printing the indicium │
              └──────────────────────────────────────────┘
                                   │
                                   ▼                      ┌─ 818
              ┌──────────────────────────────────────────┐
              │  Ensure that the selected MPSD has sufficient │
              │                  funds                    │
              └──────────────────────────────────────────┘
                                   │
                                   ▼                      ┌─ 820
              ┌──────────────────────────────────────────┐
              │ PSDM server generates info for printing the │
              │                indicium                   │
              └──────────────────────────────────────────┘
                                   │
                                   ▼                      ┌─ 822
              ┌──────────────────────────────────────────┐
              │ Info for printing the indicium communicated by │
              │    web server to requesting user system   │
              └──────────────────────────────────────────┘
```

800 ↗          FIG. 8

Funds To GPSD
Funds To GPSD
Funds To GPSD
Funds To GPSD

PAS

106

900

GPSD

902 — AR | DR — 904

MPSD 1
AR | DR

MPSD 2
AR | DR

MPSD 3
AR | DR

MPSD 4
AR | DR

. . . . . .

MPSD n
AR | DR

906-1 | 908-1  906-2 | 908-2  906-3 | 908-3  906-4 | 908-4  906-n | 908-n

Stamp

Stamp

Stamp

Stamp

Stamp

FIG. 9

From Step 816 in Fig. 8

1002

Does selected MPSD have sufficient funds to generate info for printing indicium?

No

Yes

1004

Does GPSD have sufficient funds to fund the MPSD?

No

Yes

1006

Purchase postage from postal authority and fund GPSD

1008

Use funds from GPSD to fund MPSD

1010

Adjust AR and DR values of MPSD by value of stamp for which the info for printing the indicium is to be generated

To Step 820 in Fig. 8

818

FIG. 10